# EUROPEAN PATENT APPLICATION

(11) **EP 3 733 677 A1**
(43) Date of publication of application: **04.11.2020**
(21) Application number: 19171656.2
(22) Date of filing: 29.04.2019
(51) Int. Cl.: C07F 1/12, C07F 11/00, C07F 15/00, C07F 15/04, C08F 4/44, C08F 4/60

(54) **PHOSPHAZENYL PHOSPHINES, METAL COMPLEXES OF PHOSPHAZENYL PHOSPHINES AND THEIR MANUFACTURING AND USAGE**

(71) Applicant: Philipps-Universität Marburg, 35037 Marburg (DE)
(72) Inventor: Prof. Dr. Sundermeyer, Jörg, 35041 Marburg (DE); Ullrich, Sebastian, 35037 Marburg (DE)
(74) Representative: Stumpf, Peter

(57) **Abstract**

The invention provides new compounds, phosphazenyl phosphines, metal complexes of phosphazenyl phosphines and manufacturing and usage of phosphazenyl phosphines as well as of their metal complexes. The new compounds are stronger P-superbases than the corresponding Schwesinger type phosphazene N-superbases and can be used as catalysts for chemical reactions.

## Description

We discovered, that phosphazenyl phosphines (abbreviated "PAP") such as P(N=PR₃)₃ can be stronger P-superbases than their corresponding Schwesinger type phosphazene N-superbases tBuN=P(N=PR₃)₃. A simple synthetic access to this class of PR₃ derivatives (R = N-phosphazenyl radical) including their homologization is described. XRD structures, proton affinities (PA) and gas phase basicities (GB) as well as calculated and experimental pK_{BH}⁺values in THF are presented. In contrast to their N-basic counterparts, PAPs are also privileged ligands in transition metal chemistry. In fact, they are the strongest uncharged P-donor ligands known so far, exceeding classical and more recently discovered P-superdonors such as PtBu₃ or imidazolin-2-ylidenamino phosphines lAPs with respect to their low Tolman electronic parameter TEP and large cone angles.

During the past two decades uncharged organic superbases became a veritable tool in organic synthesis. Marking the high end record of the solvent dependent p*K*_{BH}⁺ scale Schwesinger's famous phosphazene N-superbases became commercially available and subject of many investigations and applications in organic synthesis and catalysis. In previous studies we demonstrated, that N-superbasicity of a diphosphazene could dramatically be increased by placing a second diphosphazene N-donor in close proximity within a rigid spacer unit. Such bidentate chelating bisdiphosphazene proton-sponges or proton-pincers display a p*K*_{BH}⁺ up to sixteen orders of magnitude higher than their non-chelating monodentate counter parts. Homologization concept was utilized to achieve a similar trend for other uncharged nitrogen superbases such as guanidines, cyclopropene-imines, and combinations of them as well as their bidentate proton sponge derivatives. A similar molecular superbase design has been investigated by theory and experiment for uncharged carbon bases such as related phosphorus ylides and their bisylide pincers. Compared to the dominating class of N-bases, phosphorus(III) compounds were not systematically considered as extremely strong proton-acceptors so far within the state of the art. The main field of interest and application lies in creating very strong donors (i. e. electron donors, superbases) in transition metal chemistry and catalysis. Verkade's proazaphosphatranes are early representatives of rare superbasic phosphines. Schmutzler et al. attempted to synthetize a potentially very basic tris(tetramethylguanidino)phosphine. They were able to isolate the P-protonated form, but deprotonation leads to disintegration of this PR₃ derivative. In 2016 Dielmann et al. solved the problem of guanidine degradation by using related aromatically stabilized imidazolin-2-ylidenamino N-substituents to access the very interesting class of electron rich IAP ligands with their high basicity as well as outstanding Tolman electronic parameters TEP and large cone angles.

Here we report that Schwesinger's phosphazene bases, the up to date strongest uncharged proton acceptors, surprisingly become even more basic, if formally the nitrene *t*BuN unit at the terminal P(V) imine is reductively eliminated. This allows access to a class of corresponding P(III) superbases, the phosphazenyl phosphines PAPs. In contrast to phosphazenes, these PAPs are privileged to form a wide range of transition metal coordination compounds as well, thus complementing the class of IAP ligand complexes. Here, we demonstrate, that PAPs are indeed the most electron rich uncharged PR₃ donors known so far, exceeding even lAPs with respect to their higher p*K*_{BH}⁺ and lower TEP values. A convenient synthesis for PAPs and an abbreviation related to Schwesinger's phosphazenes is introduced: "**(R₂N)P^{V}ₓP^{III}**" denotes a P(III) base incorporating x phosphazenyl units. R₂N represents secondary amino substituents at the P(V) phosphazene skeleton, typically dimethylamino (dma) and pyrrolidyl (pyrr) groups, however other members of this family with alkyl groups etc. can be derived as well.

The title compounds are readily prepared by reaction of - for example - electrophiles (Me₂N)₂PCl (**1a**) or (Et₂N)₂PCl (**1b**) with - for example - built-in auxiliary base and phosphazenes (R₂N)₃P=NH (**5**) (Scheme 1). In contrast to the classical Kirsanov reaction applying PCl₃ and excess of nucleophile as auxiliary base, the inventive PAP target compounds are therefore formed in good yields and not in a mixture of ammonium and phosphonium salts difficult to separate. The very simple preparation of the desired product, resulting thereof, is also a benefit of the inventive process. As PAP hydrochlorides turned out to be hygroscopic, a precipitation step with NaBF₄ from aqueous solution leads to crystalline airstable and indefinitely storable P-H functional phosphonium salts [PAP-H]BF₄. In an early attempt to prepare the pure base ((Me₂N)₃P=N)₃P from its hydrochloride, Kirsanov et al. exchanged chloride for hydroxide (via moist Ag₂O). Vacuum dehydration of [((R₂N)₃P=N)₃PH]OH led to a viscous liquid of unknown composition, in part probably a hydrate of the base. The basicity of this species was never established experimentally but theoretically. We surprisingly discovered, that deprotonation of our class of salts [PAP-H]BF₄ and higher homologues by KHMDS (or comparable metal amides) in toluene or THF leads to colorless solids as pure P(III) Bronsted and Lewis superbases.

With this strategy the protonated forms of the symmetric **(dma)P₃P** (**2·HBF₄**) and **(pyrr)P₃P** (**3·HBF₄**) were isolated in excellent yields as exemplary products (compounds) of the inventive process. Furthermore it was possible to employ Schwesinger's homologization concept on corresponding phosphines and to synthesize the higher homologue **(dma)P₆P·HBF₄** (**4·HBF₄**).

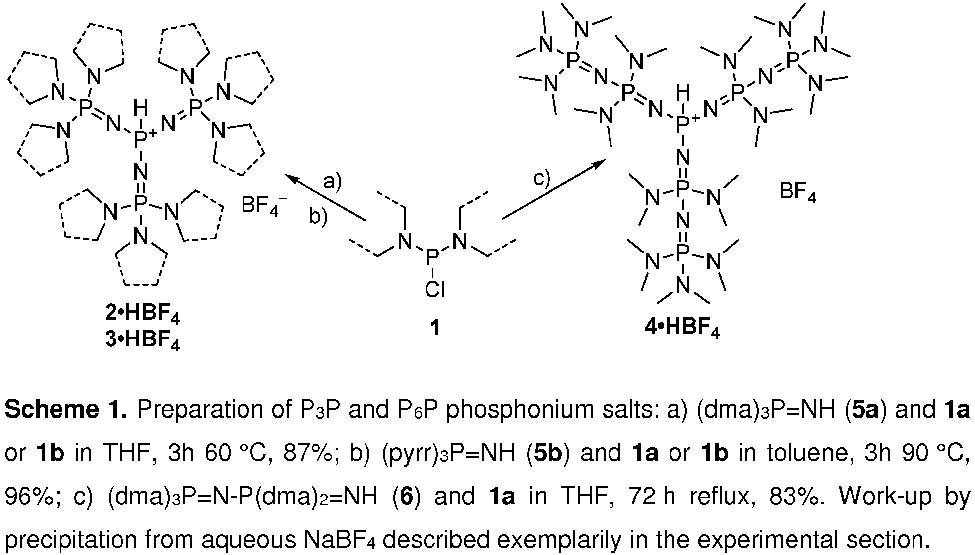

For **(dma)P₄P·HBF₄ (7·HBF₄)** having one bisphosphazenyl and two monophosphazenyl substituents the standard procedure had to be varied as shown in Scheme 2. The mixed valent P(III)/P(V) precursor **(dma)P₁P** (8) turned out to be an adequate starting material as it does not react with the phosphazenes (**6** or **5a**), but only with their protonated form **(5a·HBF₄** or **6·HBF₄)** to the corresponding phosphonium salt, which selectively reacts only with the added phosphazene to **7·HBF₄**, no matter which building block is used as free phosphazene or protonated form.

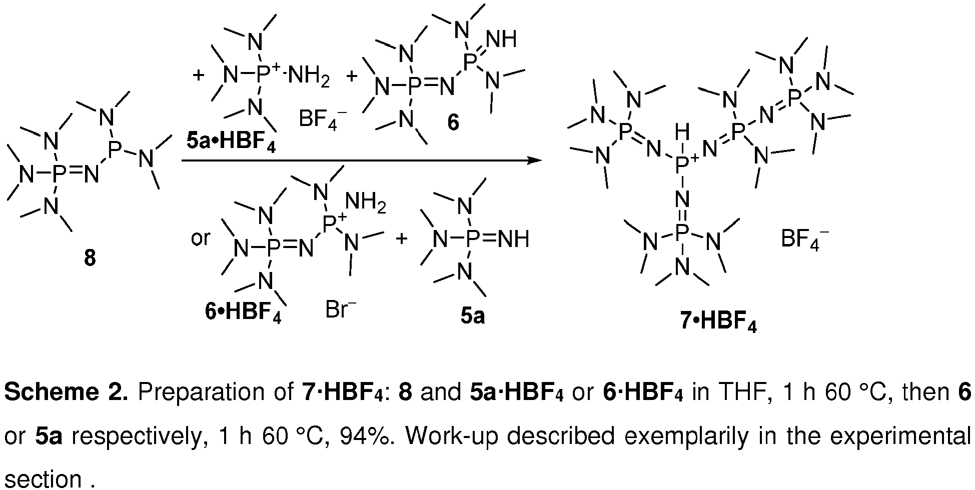

Protonated PAPs in the ³¹P NMR spectra show doublets between 21.5 and 15.3 ppm for terminal P(dma)₃ groups or at 7.9 ppm for P(pyrr)₃ groups, respectively. The bridging P(V) atoms in **7·HBF₄** and **4**·**HBF₄** show a double doublet at 2.2 or 0.1 ppm. The P(III) atom in all compounds exhibits a quartet around -30 ppm, which splits without ¹H-BB decoupling to a double quartet with a ¹*J*_{PH} coupling constant of ~550 Hz. The phosphorus bonded proton exhibits a signal in shape of a double quartet between 7.89 and 7.58 ppm in the ¹H NMR spectra. Figure 1 shows exemplarily the molecular structures of the phosphonium cations with the acidic protons always located at the central phosphorus atom. The formal P-N single bonds are with average bond length of 1.57 Å even slightly shorter than formal P=N double bonds (1.60 Å) and reveal a strong influence of negative hyperconjugation. The N-P=N angle is widened up between 129.0 and 157.7°. Dimethylamino groups have P-N distances of 1.646 Å for terminal phosphazenyl groups, and 1.670 Å in bridging phosphazenyl groups. Pyrrrolidine substituents are bonded with an average distance of 1.640 Å.

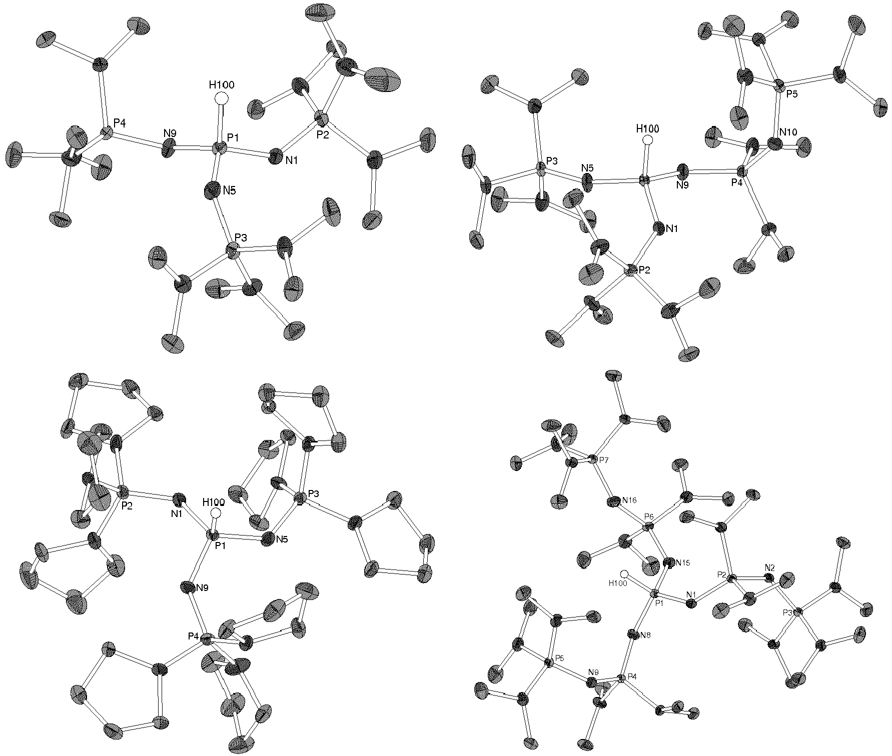

**Figure 1.** Molecular structures of **2·HBPh₄, 3·HBPh₄, 7·HBF₄,** and **4·HBF₄.** Carbon bonded hydrogen atoms and the anion omitted for clarity, ellipsoids at 50% probability, in case of disorder only the major component is displayed. Selected bond length [Å] and angles [°]: **2·HBPh₄:** P2₁/*n* P1-N1 1.5941(13), P1-N5 1.5896(14), P1-N9 1.6074(14), N1-P2 1.5560(13), N5-P3 1.5560(13), N9-P4 1.5632(13), P1-N1-P2 136.90(9), P1-N5-P3 137.37(9), P1-N9-P4 131.57(9). **3·HBPh₄:** *P*⁻1 P1-N1 1.5980(14), P1-N5 1.6021(14), P1-N9 1.5956(14), N1-P2 1.5676(14), N5-P3 1.5786(14), N9-P4 1.5618(13), P1-N1-P2 133.00(9), P1-N5-P3 129.02(9), P1-N9-P4 134.02(10). **7·HBF₄:** P2₁/*c* P1-N1 1.5999(12), P1-N5 1.5902(12), P1-N9 1.5884(12), N1-P2 1.5660(12), N5-P3 1.5408(12), N10-P5 1.5674(13), N9-P4 1.5798(12), P4-N10 1.5881(12), P4-N11 1.6713(13), P4-N12 1.6572(12), P1-N1-P2 137.46(8), P1-N5-P3 157.67(9), P1-N9-P4 133.27(8), P4-N10-P5 132.26(8), N9-P4-N10 120.09(7), N11-P4-N12 111.28(7). **4·HBF₄:** *P*⁻1 P1-N1 1.6083(16), P1-N8 1.5901(16), P1-N15 1.5931(16), P2-N2 1.5961(16), P4-N9 1.5981(16), P6-N16 1.5924(17), N1-P2 1.5737(16), N8-P4 1.5733(16), N15-P6 1.5638(16), N2-P3 1.5679(16), N9-P5 1.5628(16), N16-P7 1.5485(17), P1-N1-P2 129.13(10), P1-N8-P4 136.87(11), P1-N15-P6 134.52(11), P2-N2-P3 133.37(10), P4-N9-P5 133.47(11), P6-N16-P7 145.36(11).

Upon deprotonation the ³¹P NMR signals show a strong downfield shift to ∼80 ppm for the signal of the P(III) atoms, whilst the P(V) signal gets slightly upfield shifted and the ²*J*_{PP} coupling constants becomes smaller. So far, we did not yet isolate the free base form of **(dma)P₆P** (**4**), but could generate it in situ in a suspension of large excess freshly ground NaNH₂ in THF or potassium pyrrolidid in toluene. Deprotonation under the action of organolithium bases lead to side reactions whereas potassium in liquid ammonia or ethylendiamine showed no reactivity due to lack of proton activity. The existence of this probably strongest of all uncharged metal free bases **4** could however be proven by a combination of ³¹P NMR spectroscopy and consecutive reactions as well as by calculations. Similar to Schwesinger's P₇-*t*Bu phosphazene counterpart isolation of an analytically pure sample of the base form **(dma)P₆P** remains a challenge for future work.

The electron donor capability of PAPs was quantified by p*K*_{BH}⁺ values (Table 1), the Tolman electronic parameter (TEP) and the ¹*J*_{PSe} coupling (Table 2). Evaluation of NMR titration experiments of the phosphonium salts against Schwesinger's (dma)P₄-*t*Bu (p*K*_{BH}⁺ in THF: 33.9) or (pyrr)P₄-*t*Bu (35.3) as reference bases revealed the highest p*K*_{BH}⁺ values known so far for any phosphines. More importantly, the basicity of phosphines **2** and **3** exceeds the basicity of their corresponding reference phosphazenes by 0.9 and 1.4 units, respectively. Therefore, although superbase **4** was not isolated, we could determine its basicity with high accuracy. It appears that p*K*_{BH}⁺ (THF) of **4** surpass that of (dma)P₄-*t*Bu by 7.1 units. Inspection of data reveals that phosphines **2** and **3** possess higher p*K*_{BH}⁺ (THF) values than corresponding phosphazenes, whereas **7** and **4** are slightly less basic in comparison with related phosphazenes. The origin of higher p*K*_{BH}⁺ values of the former is their higher intrinsic (gas phase) basicity, whereas solvation effects work into the opposite direction - protonated phosphazenes are better solvated in THF than protonated phosphines. Slightly higher basicity of (dma)P₅-*t*Bu and (dma)P₇-*t*Bu phosphazenes in the gas phase and in THF could be attributed to a presence of weak intramolecular hydrogen bonds (IHB) in conjugate acids that does not exist in (dma)P₄-*t*Bu and (pyrr)P₄-*t*Bu, neither in any of studied phosphines. However, influence of IHB weakens in solvents of higher dielectric constants such as acetonitrile, therefore in this solvent all studied phosphines are stronger bases than related phosphazenes.

Small proton self-exchange rates are indicated by high coalescence temperatures of 1:1 mixtures of PAP bases and their acid forms in NMR solvents. These low rates are probably due to small polarization of the P-H bond compared to N-H. Barriers for the intermolecular proton exchange are 15.5 kcal·mol⁻¹ for **2** and 16.5 kcal·mol⁻¹ for **3**, which complies with an exchange rate of 13 Hz and 3 Hz respectively (all at 293 K) and are therefore more in the region of proton sponges of high kinetic basicity rather than of their phosphazene counterparts.

**Table 1. Experimental pK_{BH}⁺ values in THF.**

| | *p*K_{BH}⁺(TH F) experimental |
|---|---|
| (dma)P₃P | 34.9^{[b,c]} |
| (pyrr)P₃P | 36.7^{[c]} |
| (dma)P₄P | 37.2^{[c]} |
| (dma)P₆P | - |
| P(NI*i*Pr)₃ | 31.0 |
| Verkade base | 24.1 |
| (dma)P₄-*t*Bu | 33.9 |
| (pyrr)P₄-*t*Bu | 35.3 |

| | |
|---|---|
| [b] ³¹P NMR titration against (dma)P₄-*t*Bu. [c] ³¹P NMR titration against (pyrr)P₄-*t*Bu. | |

Corresponding phosphine selenides **9-12** were obtained by oxidation of PAPs with grey selenium, [(PAP)Ni(CO)₃] complexes **13-16** by reaction with [Ni(CO)₄] (Scheme 3).

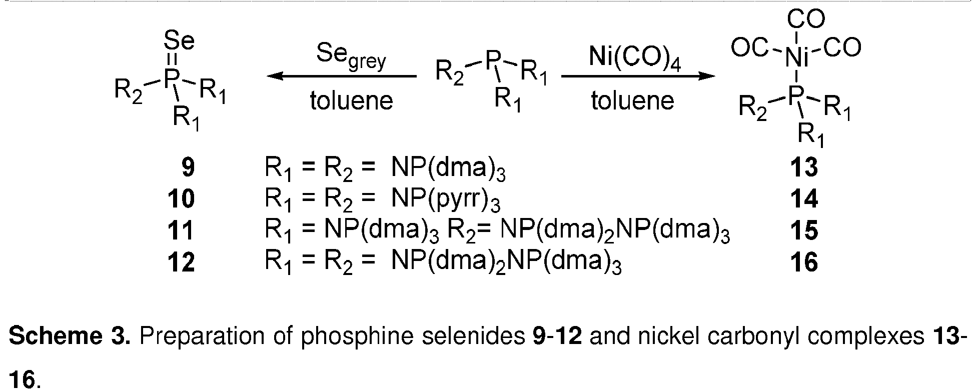

A much more distinctness of formal P-N single and double bonds, compared to protonated PAPs, was found in the XRD molecular structures of representative PAP complexes of nickel (**15**) and platinum (**17**) (Figure 4) as well as the selenide **10** (displayed in the experimental section) with average formal P=N and P-N bonds of 1.543 Å and 1.624 Å, respectively. The ¹*J*_{PSe} coupling constants are in accordance with the trend in PAP basicity: We observe drastically lower coupling compared to prominently basic phosphorus selenides. Most interestingly, the TEP values of PAPs are considerably lower than those of known lAPs. Therefore the strongest uncharged electron donating PR₃ ligands known so far are revealed herein.

These phosphazenylphosphines ("PAP") can be advantageously used as extremely basic organic uncharged catalysts and/or as ligands in metal complexes. The metal complexes can be used as catalysts for numerous chemical reactions where metal and / or base-catalysis is applied. For example, the Au^{I}-PAP-complexes are very effective catalysts for the Au(I)-catalyzed hydroamination of alkynes with amines or Pd(0)-catalyzed CC-cross-coupling reactions. PAP-platinum(0) complexes highly efficiently catalyze olefin hydrosilylation reactions. Also, polymerization reactions, e.g. the anionic polymerization of methyacrylate MMA to PMMA can be catalyzed very efficiently by PAP even in the absence of metals and in the presence or absence of alcohols. Many more examples of using PAPs as superdonor ligands in catalysts or as proton acceptor catalysts are envisaged.

PAPs combine steric and electronic properties that are highly valuable for the design of extremely electron-rich transition-metal bases such as platinum complexes **17** and **18** (Scheme 4). The extreme reducing power of PAPs leads to reductive elimination of chlorine and substitution of PPh₃ at [(Ph₃P)₂PtCl₂] to form linear 14 valence electron bisphosphine complexes **17** and **18.**

**Table 2. TEP values and ¹J_{PSe} couplings of selenides.**

| | TEP /cm^{-1[a]} | ¹ *J*_{PSe}/Hz ^{[c]} |
|---|---|---|
| (dma)P₃P | 2022.4 | 654 |
| (pyrr) P3P | 2018.6 | 628 |
| (dma)P₄P | 2017.3 | 631 |
| (dma)P₆P | 2014.5^{[c]} | 608^{[c]} |
| P(NI*i*Pr)₃ | 2029.7 | - |
| Verkade base | 2057.0 | 754 |
| P*t*Bu₃ | 2056.1 | 687 |

| | | |
|---|---|---|
| [a] Determined via ATR-IR spectroscopy of neat substance. [c] ¹*J*_{PSe} couplings determined in this work via ³¹P and ⁷⁷Se NMR spectroscopy in C₆D₆ at room temperature. [c] Reaction of **4·HBF₄,** NaNH₂ and Ni(CO)₄ or Se_{gray} respectively, no pure compound isolated. | | |

XRD data of **17** reveal that the Pt-P bond to sterically less demanding PPh₃ ligand (2.213 Å) is shorter than that to PAP (2.312 Å) indicating the importance of PPh₃ *π-*backbonding contrasting the extreme PAP σ□donation in such heteroleptic model complexes. The assumption of an almost pure and strong PAP-Pt *σ*-bond is in compliance with results from ³¹P and ¹⁹⁵Pt NMR spectroscopy: The *¹J*_{PPt} Pt-PPh₃ coupling constant of 3236 Hz is only about half as large as the one of Pt-PAP (6153 Hz). So far this seems to be one of the largest ¹*J*_{PPt} reported in Pt-PR3 literature. The ¹⁹⁵Pt NMR shift of 17 (-6238 ppm) is in the range of homoleptic [Pt(P*t*Bᵤ₃)]*δ*_{Pt} = -6471 ppm, ¹*J*_{PPt} = 4420 Hz, Pt-P 2.249 Å). This indicates that the much stronger electron donating PAP is compensating the better *π*-backbonding PPh₃ ligand in the overall shielding.

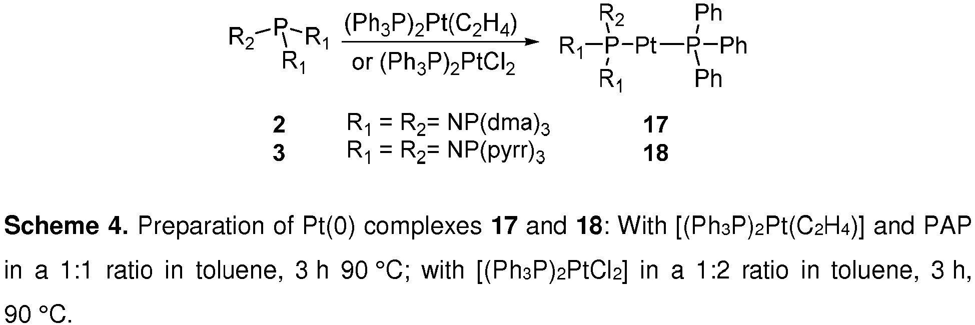

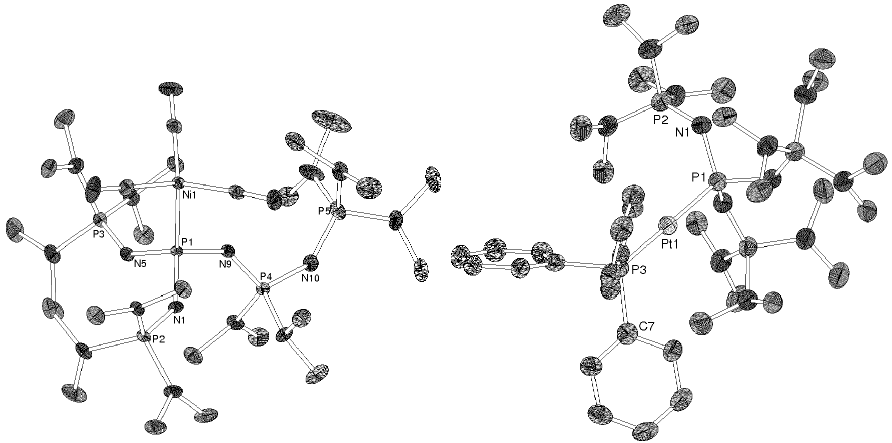

**Figure 4.** Molecular structures of **15** and **17.** Hydrogen atoms omitted for clarity, ellipsoids at 50% probability, in case of disorder only the major component is displayed. Selected bond length [Å] and angles [°]: **15:** *P*2₁2₁2₁ P1-Ni1 2.2640(7), P1-N1 1.657(2), P1-N5 1.666(2), P1-N9 1.648(2), N1-P2 1.536(2), N5-P3 1.540(2), N10-P5 1.548(2), N9-P4 1.554(2), P4-N10 1.608(2), P4-N11 1.684(2), P4-N12 1.666(2), P1-N1-P2 139.92(15), P1-N5-P3 138.36(15), P1-N9-P4 140.08(14), P4-N10-P5 138.83(15), N9-P4-N10 114.92(12), N11-P4-N12 103.10(12). **17:** *Pa*⁻3 P1-Pd1 2.3123(19), P3-Pd1 2.2129(18), P1-N1 1.653(3), N1-P2 1.544(3), P1-N1-P2 132.6(2), N1-P1-P3-C7 167.4(2).

In summary, we presented a sophisticated synthesis, the homologization strategy and structural characterization of a class of phosphazenyl phosphines PAPs. Very surprisingly such uncharged P(III) superbases are more basic than corresponding phosphazenyl phosphazenes (Schwesinger bases), so far the champions for strongest uncharged bases. Ranking in their kinetic and thermodynamic basicity seems to be depending on differences in P-H and N-H bond polarity and solvation effects. They are stronger donor ligands towards transition metals than any other known PR₃ ligand class, consequently they reveal the lowest Tolman electronic parameter TEP of all PR₃ ligands. These findings are based on experimental *pK*_{BH}⁺ (THF) values, on experimental NMR and IR data, finally on XRD structures of exemplarily synthesized PAP adducts with representative transition metals, with the non-metal selenium and the simplest electrophile of all, the proton.

### Experimental section

### Synthetic Details

### General Remarks

All reactions with air or moisture sensitive substances were carried out under inert atmosphere using standard Schlenk techniques. Air or moisture sensitive substances were stored in a nitrogen-flushed glovebox. Solvents were purified according to common literature procedures and stored under an inert atmosphere over molsieve (3 Å or 4 Å). Pyrrolidine was distilled from CaH₂. Potassium bis(trimethylsilyl)amide, benzyl potassium, (*η*²-ethylene)bis(triphenylphosphane)platinum(0), bis(dimethylamino)phosphorus chloride (**1a**), tris(dimethylamino)phosphazene (**5a**), tris(pyrrolidino)phosphazene (**5b**) and (pyrr)P₄-*t*Bu were prepared according to literature-known procedures. (dma)P₄-*t*Bu was purchased as 1M solution in n-hexan and dried in high vacuum. All other reagents were used as provided.
¹H, ¹³C, ³¹P and ⁷⁷Se NMR spectra were recorded on a Bruker Avance III HD 250, Avance II 300, Avance III HD 300 or Avance III HD 500 spectrometer. Chemical shift *δ* is denoted relatively to SiMe₄ (¹H, ¹³C), 85% H₃PO₄ (³¹P), SeMe₂ (⁷⁷Se) or K₂PtCI₆ (¹⁹⁵Pt). ¹H and ¹³C NMR spectra were referenced to the solvent signals, ¹⁹⁵Pt NMR spectra externally to K₂PtCI4 (0.5M in D₂O, *δ* = -1617.5 ppm). Multiplicity is abbreviated as follows: s (singlet), d (doublet), t (triplet), q (quartet), m (multiplet), br. (broad signal). High resolution mass spectrometry were performed on a Thermo Fisher Scientific LTQ-FT Ultra or a Jeol AccuTOF GCv., elemental analysis on an Elementar Vario Micro Cube. IR spectra were recorded in a glovebox on a Bruker Alpha ATR-FT-IR.

### General procedure for the precipitation of tetrafluoridoborate and tetraphenylborate salts from aqueous solution:

The crude product was dissolved in a minimum amount of water and a solution of a 10% excess of the respective sodium WCA salt in a minimal amount of water was added under stirring. The precipitate was filtered or centrifuged off, rinsed with cold water and dried in high vacuum. The compounds can be reprecipitated from THF/diethyl ether.

### General procedure for the preparation of phosphane containing solutions:

A mixture of the respective phosphonium tetrafluoridoborate and a 10% excess of base, e.g. potassium bis(trimethylsilyl)amide, was stirred for 90 min in toluene, centrifuged and the supernatant clear solution used for consecutive reactions.

### Amino[tris(dimethylamino)phosphazenyl]bis(dimethylamino)phosphonium bromide (6-HBr):

The compound was synthesized as BF₄⁻ salt from the respective phosphine oxide before. Here we present a preparation via [tris(dimethylamino)]bis(dimethylamino)phosphine (**8**): 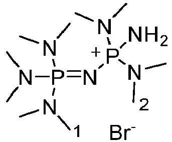 **8** (32.87 g, 111 mmol, 1.00 eq) was dissolved in 250 mL THF and cooled to 0 °C. Bromine (5.70 mL, 111 mmol, 1.00 eq) was added dropwise and after warming to room temperature ammonia was passed into the mixture. Precipitated ammonium bromide was filtered off and extracted with dichloromethane. The combined filtrate was evaporated and n-pentane was added to the residue. The supernatant solution was decanted and the solid dried in vacuo to isolate **6·HBr** (36.94 g, 94 mmol, 85%) as colorless solid. Consecutive deprotonation to **6** was conducted as is known by the person skilled in the art (cf., for example, the method of Schwesinger.
[C₁₀H₃₂BrN₇P₂] (392.27 g-mol⁻¹) ¹H-NMR (300.2 MHz, CDCl₃): δ (ppm) = 4.24 (br. d, ²*J*_{PH} = 4 Hz, 2H, NH₂) 2.70 (d, ²*J*_{PH} = 11 Hz, 12H, *H2),* 2.68 (d, ²*J*_{PH} = 10.4 Hz, 18H, *H1).* ¹³C{¹H}-NMR (75.5 MHz, CDCl₃): *δ* (ppm) = 37.2 (d, ²*J*_{PC} = 5 Hz, *C2),* 37.2 (d, ²*J*_{PC} = 5 Hz, *C1*). ³¹P{¹H}-NMR (121.5 MHz, CDCl₃): *δ* (ppm) = 21.2 (d, ²*J*_{PP} = 59 Hz, *P1),* 16.6 (d, ²*J*_{PP} = 59 Hz, *P2).* ESI(+)-MS (MeOH): m/z (%) = 312.41 (100) [M-Br]⁺. ESI(+)-HRMS: m/z [M-Br]⁺ calcd. 312.2184, found 312.2189. Elemental analysis: calcd. C 30.62%, H 8.22%, N 25.00%; found C 30.77%, H 8.32%, N 25.22%.

### Tris[tris(dimethylamino)phosphazenyl]phosphonium tetrafluoridoborate (dma)P₃P·HBF₄ (2-HBF₄):

The preparation of the hydrochloride **2·HCl** from phosphorus trichloride was described by Kirsanov et al. 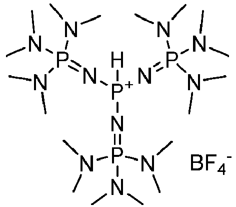 **1a** (326 mg, 2.11 mmol, 1.00 eq), dissolved in THF (10 mL), was added to a solution of **5a** (1.15 g, 6.45 mmol, 3.06 eq) in THF (30 mL). After stirring for 1 h at room temperature the mixture was heated for 3 h at 60 °C. All volatile components were removed in vacuo and the residue washed with diethyl ether (3x 40 mL). After drying in high vacuum the hygroscopic **2·HCl** was converted to its tetrafluoridoborate salt as described in the general procedure to afford **2·HBF₄** (1.196 g, 1.84 mmol, 87%) as colorless solid.
[C₁₈H₅₅BF₄N₁₂P₄] (650.42 g**·**mol⁻¹) ¹H-NMR (500.2 MHz, C₆D₆): δ (ppm) = 7.65 (dq, ¹*J*_{PH} = 554 Hz, ³*J*_{PH} = 5 Hz, 1H, PH), 2.49 (d, ³*J*_{PH} = 10 Hz, 54H, N(CH₃)₂). ¹³C{¹H}-NMR (125.8 MHz, C₆D₆): δ (ppm) = 37.1 (d, ²*J*_{PC} = 4 Hz). ³¹P{¹H}-NMR (202.5 MHz, C₆D₆): *δ* (ppm) = 21.5 (d, ²*J*_{PP} = 30 Hz, P(dma)₃), -28.9 (q, ²*J*_{PP} = 31 Hz, PH). ³¹P-NMR (202.5 MHz, C₆D₆): δ (ppm) = 21.5 (br. m, P(dma)₃), -28.9 (dq, ¹*J*_{PH} = 554 Hz, ²*J*_{PP} = 31 Hz, PH). ESI(+)-MS (MeOH): m/z (%) = 563.7 (100) [M-BF₄]⁺. ESI(+)-HRMS: m/z [M-BF₄]⁺ calcd. 563.3618, found 563.3628. Elemental analysis: calcd. C 33.24%, H 8.52%, N 25.84%; found C 32.90%, H 8.52%, N 25.49%. IR (neat): *ṽ* (cm⁻¹) = 2883 (m, CH₃), 2848 (m, CH₃), 2803 (m, CH₃), 2300 (w, PH), 1457 (m), 1289 (m), 1230 (s), 1179 (s), 1094 (m), 1050 (s), 969 (vs), 854 (m), 832 (m), 766 (m), 740 (s), 642 (m), 612 (m), 500 (s). XRD: For single crystal X-ray structure determination BPh₄- was used instead of BF4-. Suitable single crystals were obtained by slowly cooling a concentrated solution in methanol/water.

### Tris[tris(pyrrolidino)phosphazenyl]phosphonium tetrafluoridoborate (pyrr)P₃P·HBF₄ (3·HBF₄)

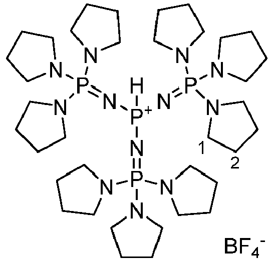

**5b** (4.494 g, 17.53 mmol, 3.06 eq) was dissolved in toluene (10 mL), added to a solution of **1a** (0.884 g, 5.72 mmol, 1.00 eq) in toluene (10 mL) and stirred for 3 h at 90 °C. All volatile components were removed in vacuo and the resulting colorless solid was washed with diethyl ether (3x 20 mL) to extract the excess of phosphazene. After drying in high vacuum the hygroscopic **3**·**HCl** was converted to its tetrafluoridoborate salt as described in the general procedure to afford **3·HBF₄** (4.839 g, 5.47 mmol, 96%) as colorless solid.
[C₃₆H₇₃BF₄N₁₂P₄] (884.76 g**·**mol⁻¹) ¹H-NMR (300.2 MHz, C₆D₆): *δ* (ppm) =7.89 (dq, ¹*J*_{PH} = 556 Hz, ³*J*_{PH} = 4 Hz, 1H, PH), 3.21-3.17 (m, 36H, *H1),* 1.77-1.73 (m, 36H, *H2).* ¹³C{¹H}-NMR (75.5 MHz, C₆D₆): *δ* (ppm) = 47.2 (d, ²*J*_{PC} = 5 Hz, *C1*), 26.9 (d, ³*J*_{PC} = 8 Hz, *C2*). ³¹P{¹H}-NMR (101.3 MHz, C₆D₆): *δ* (ppm) = 7.9 (d, ²*J*_{PP} = 24 Hz, *P*(pyrr)₃), -29.3 (q, ²*J*_{PP} = 23 Hz, *P*H). ³¹P-NMR (101.3 MHz, C₆D₆): *δ* (ppm) = 7.9 (br. d, ²*J*_{PP} = 24 Hz, *P*(pyrr)₃), -29.3 (dq, ¹*J*_{PH} = 555 Hz, ²*J*_{PP} = 23 Hz, PH). ESI(+)-MS (MeOH): m/z (%) = 798.0 (100) [M-BF₄]⁺. ESI(+)-HRMS: m/z [M-BF₄]⁺ calcd. 797.5026, found 797.5030. Elemental analysis: calcd. C 48.87%, H 8.32%, N 19.00%; found C 48.68%, H 8.36%, N 18.95%. IR (neat): *ṽ* (cm⁻¹) = 2949 (m, CH₂), 2853 (m, CH₂), 2292 (w, PH), 1448 (w), 1345 (w), 1313 (w), 1223 (m), 1202 (s), 1125 (s), 1079 (s), 1046 (s), 994 (s), 912 (m), 866 (m), 813 (m), 765 (m), 701 (w), 587(s), 560 (s), 501 (s). XRD: For single crystal X-ray structure determination BPh₄⁻ was used instead of BF₄⁻. Suitable single crystals were obtained by dissolving in toluene and layering with diethyl ether.

### [Pentakis(dimethylamino)diphosphazenyl]bis[tris(dimethylamino)phosphazenyl]-phosphonium tetrafluoridoborate (dma)P₄P·HBF₄ (7·HBF₄)

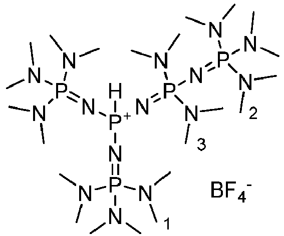

**8** (1.519 g, 5.12 mmol, 1.17 eq) was added to a suspension of **5a**·**HBF₄** (1.165 g, 4.38 mmol, 1.00 eq) in THF (60 mL) and stirred for 1 h at 60 °C. After cooling to room temperature **6** (1.364 g, 4.38 mmol, 1.00 eq) was added and the mixture was stirred for one additional hour at 60 °C. All volatile components were removed in vacuo and the resulting oil was diluted with n-hexane (40 mL) to precipitate the product, which was washed after decantation of the supernatant solvent with more n-hexane (2x 40 mL). Drying in high vacuum afforded **7·HBF₄** (3.230 g, 4.122 mmol, 94%) as colorless solid.
[C₂₂H₆₇BF₄N₁₅P_{5]} (783.56 g.mol⁻¹) ¹H-NMR (500.1 MHz, C₆D₆): δ (ppm) = 7.60 (ddt, ¹*J*_{PH} = 549 Hz, ³*J*_{PH} = 6 Hz, ³*J*_{PH} = 2 Hz, 1H, PH), 2.57 (d, ³*J*_{PH} = 11 Hz, 12H, *H3),* 2.54 (d, ³*J*_{PH} = 10 Hz, 18H, *H2),* 2.53 (d, ³*J*_{PH} = 10 Hz, 36H, *H1*). ¹³C{¹H}-NMR (125.8 MHz, C₆D₆): *δ* (ppm) = 37.6 (d, ²*J*_{PC} = 4 Hz, *C3),* 37.2 (d, ²*J*_{PC} = 5 Hz, *C1*), 31.1 (d, ²*J*_{PC} = 5 Hz, *C2).* ³¹P{¹H}-NMR (101.3 MHz, C₆D₆): *δ* (ppm) = 19.9 (d, ²*J*_{PP} = 27 Hz, *P1),* 16.6 (d, ²*J*_{PP} = 54 Hz, *P2),* 2.2 (dd, ²*J*_{PP} = 54 Hz, ²*J*_{PP} = 27 Hz, *P3),* -28.8 (dt, 2x ²*J*_{PP} = 27 Hz, *P*H). ³¹P-NMR (101.3 MHz, C₆D₆): *δ* (ppm) = 19.9 (br. m, *P1*), 16.6 (br. m, *P2*), 2.2 (br. m, *P3*), -28.8 (ddt, ¹*J*_{PH} = 549 Hz, 2x ²*J*_{PP} = 27 Hz, *P*H). ESI(+)-MS (MeOH): m/z (%) = 696.6 (100) [M-BF₄]⁺. ESI(+)-HRMS: m/z [M-BF₄]⁺ calcd. 696.4386, found 696.4402. Elemental analysis: calcd. C 33.72%, H 8.62%, N 26.81%; found C 33.64%, H 8.26%, N 26.81%. IR (neat): *ṽ* (cm⁻¹) = 2996 (w, CH₃), 2885 (br. m, CH₃), 2848 (m, CH₃), 2807 (w, CH₃), 2316 (w, PH), 1455 (w), 1361 (w), 1269 (s), 1232 (s), 1181 (s), 1093 (m), 1049 (s), 1035 (sh. s), 966 (vs), 860 (m), 808 (w), 794 (w), 736 (s), 642 (m), 591 (w), 499 (s), 480 (m), 447 (m). XRD: For single crystal X-ray structure determination suitable single crystals were obtained by dissolving in toluene and layering with n-hexane.

### Tris[pentakis(dimethylamino)diphosphazenyl]phosphonium tetrafluoridoborate (dma)P₆P·HBF₄ (4·HBF₄)

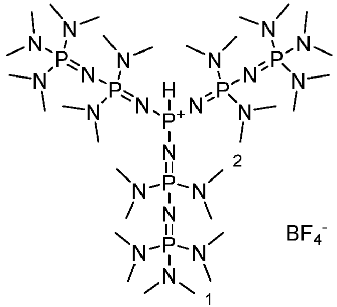

**1a** (329 mg, 2.13 mmol, 1.00 eq), dissolved in 5 mL THF, was added to a solution of **6** (2.00 g, 6.43 mmol, 3.01 eq) in THF (20 mL). After stirring for 1 h at room temperature a reflux condenser with a bubbler was mounted and the clear reaction mixture was heated for 72 h under reflux conditions. All volatile components were removed in vacuo, n-hexane (40 mL) was added to the residue to precipitate the product as colorless solid and separate it from the supernatant solvent by decantation. After washing with n-hexane (2x 20 mL) and drying in high vacuum the hygroscopic **4·HCl** was converted to its tetrafluoridoborate salt as described in the general procedure to afford **4**·**HBF₄** (1.858 g, 1.77 mmol, 83%) as colorless solid.
[C₃₀H₉₁BF₄N₂₁P₇] (1049.83 g**·**mol⁻¹) ¹H-NMR (300.2 MHz, C₆D₆): *δ* (ppm) = 7.58 (dq, ¹*J*_{PH} = 540 Hz, ³*J*_{PH} = 5 Hz, 1H, PH), 2.67 (d, ³*J*_{PH} = 11 Hz, 36H, *H2*), 2.57 (d, ³*J*_{PH} = 10 Hz, 54H, *H1*). ¹³C{¹H}-NMR (75.5 MHz, C₆D₆): *δ* (ppm) = 38.0 (d, ²*J*_{PC} = 4 Hz, *C2),* 37.1 (d, ²*J*_{PC} = 5 Hz, *C1*). ³¹P{¹H}-NMR (101.3 MHz, C₆D₆): δ (ppm) = 15.3 (d, ²*J*_{PP} = 54 Hz, *P1),* 0.1 (dd, ²*J*_{PP} = 54 Hz, ²*J*_{PP} = 23 Hz, *P2),* -30.6 (q, ²*J*_{PP} = 24 Hz, PH). ³¹P-NMR (101.3 MHz, C₆D₆): δ (ppm) = 15.3 (br. m, *P1*), 0.1 (br. m, *P2*), -30.6 (dq, ¹*J*_{PH} = 540 Hz, ²*J*_{PP} = 24 Hz, PH). ESI(+)-MS (MeOH): m/z (%) = 962.8 (100) [M-BF₄]⁺. ESI(+)-HRMS: m/z [M-BF₄]⁺ calcd. 962.5924, found 962.5926. Elemental analysis: calcd. C 34.32%, H 8.74%, N 28.02%; found C 34.22%, H 8.65%, N 28.03%. IR (neat): *ṽ* (cm⁻¹) = 2874 (br. m, CH₃), 2796 (m, CH₃), 2308 (w, PH), 1456 (m), 1271 (s), 1230 (s), 1178 (s), 1093 (m), 1049 (s), 963 (vs), 857 (s), 786 (m), 736 (m), 641 (s), 586 (m), 507 (s), 479 (s). XRD: For single crystal X-ray structure determination suitable crystals were obtained by slowly evaporating a concentrated solution in diethyl ether.

### Tris[tris(dimethylamino)phosphazenyl]phosphine (dma)P₃P (2)

In an early attempt to prepare the free base from its hydrochloride, Kirsanov et al. exchanged chloride for hydroxide (via moist Ag₂O). Vacuum dehydration of [(dma)P₃P-H]OH_{aq} led to a viscous liquid. 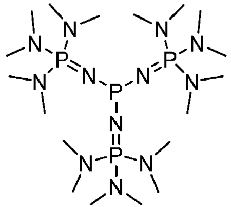 A solution of potassium bis(trimethylsilyl)amide (403 mg, 2.02 mmol, 1.00 eq) in toluene (20 mL) was added slowly to a solution of **2-HBF₄** (1.314 g, 2.02 mmol, 1.00 eq) and stirred for 30 min at room temperature. Precipitated potassium tetrafluoridoborate was centrifuged off and all volatiles of the clear solution were removed in vacuo. The resulting oil was dissolved in n-pentane (30 mL) and filtered over celite. Evaporation of the solvent and drying in high vacuum yielded **2** (985 mg, 1.75 mmol, 87%) as colorless solid.
[C₁₈H₅₄N₁₂P₄] (562.61 g-mol⁻¹) ¹H-NMR (500.2 MHz, C₆D₆): δ (ppm) = 2.74 (d, ³*J*_{PH} = 10 Hz, 54H). ¹³C{¹H}-NMR (125.8 MHz, C₆D₆): *δ* (ppm) = 38.2 (dd, ²*J*_{PC} = 3 Hz, ⁴*J*_{PC} = 3 Hz). ³¹P{¹H}-NMR (202.5 MHz, C₆D₆): δ (ppm) = 83.4 (q, ²*J*_{PP} = 19 Hz, *P*^{III}), 14.4 (d, ²*J*_{PP} = 21 Hz, P(dma)₃). LIFDI(+)-MS (toluene): m/z (%) = 562.4 (20) [M]⁺, 563.4 (100) [M+H]⁺. LIFDI(+)-HRMS: m/z [M]⁺ calcd. 562.35448, found 562.35234. Elemental analysis: calcd. C 38.43%, H 9.67%, N 29.88%; found C 38.33%, H 9.83%, N 30.15%. IR (neat): *ṽ* (cm⁻¹) = 2991 (w, CH₃), 2865 (m, CH₃), 2831 (m, CH₃), 2788 (m, CH₃), 1453 (m), 1282 (m), 1166 (vs), 1064 (m), 990 (sh. s), 959, (vs), 765 (m), 720 (vs), 609 (m), 572 (s), 518, (w), 481 (m), 442 (m), 414 (w).

### Tris[tris(pyrrolidino)phosphazenyl]phosphine (pyrr)P₃P (3)

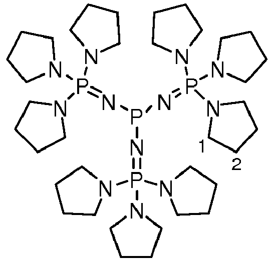

A solution of potassium bis(trimethylsilyl)amide (341 mg, 1.71 mmol, 1.00 eq) in toluene (20 mL) was added slowly to a solution of **3·HBF₄** (1.510 g, 1.71 mmol, 1.00 eq) in toluene (30 mL) and stirred for 90 min at room temperature. Precipitated potassium tetrafluoridoborate was centrifuged off and all volatile components of the clear solution were removed in vacuo. The residue was dissolved in *n*-pentane (20 mL), filtered over celite and the filter cake extracted with n-pentane (20 mL). The solvent was evaporated and the resulting oil dried in high vacuum until crystallization set in. **3** (1.202 g, 1.51 mmol, 88%) was isolated as colourless solid.
[C₃₆H₇₂N₁₂P₄] (796.95 g-mol⁻¹) ¹H-NMR (500.1 MHz, C₆D₆): δ (ppm) =3.45-3.41 (m, 36H, *H1*), 1.78-1.73 (m, 36H, *H2*). ¹³C{¹H}-NMR (125.8 MHz, C₆D₆): *δ* (ppm) = 47.4 (dd, ²*J*_{PC} = 4 Hz, ⁴*J*_{PC} = 4 Hz *C1*), 26.9 (d, ³*J*_{PC} = 8 Hz, *C2*). ³¹P{¹H}-NMR (202.5 MHz, C₆D₆): *δ* (ppm) = 81.1 (q, ²*J*_{PP} = 10 Hz, *P*^{III}), 1.35 (d, ²*J*_{PP} = 12 Hz, P(pyrr)₃). ³¹P-NMR (202.5 MHz, C₆D₆): *δ* (ppm) = 81.1 (q, ²*J*_{PP} = 10 Hz, *P*^{III}), 1.35 (br. s, *P*(pyrr)₃). LIFDI(+)-MS (THF): m/z (%) = 796.5 (34) [M]⁺, 797.5 (100) [M+H]⁺. LIFDI(+)-HRMS: m/z [M]⁺ calcd. 796.49533, found 796.49287. Elemental analysis: calcd. C 54.26%, H 9.11%, N 21.09%; found C 53.55%, H 9.14%, N 20.92%. IR (neat): *ṽ* (cm⁻¹) = 2953 (m, CH₂), 2843 (m, CH₂), 1456 (w), 1342 (w), 1290 (w), 1179 (s), 1129 (vs), 1059 (vs), 995 (s), 911 (m), 872 (m), 809 (w), 756 (s), 690 (m), 562 (s), 477 (s), 424 (m).

### [Pentakis(dimethylamino)diphosphazenyl]bis[tris(dimethylamino)phosphazenyl]-phosphine (dma)P₄P (7)

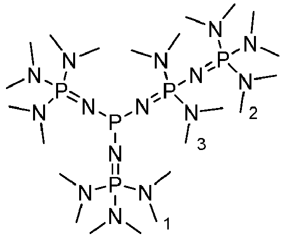

A solution of potassium bis(trimethylsilyl)amide (275 mg, 1.38 mmol, 1.01 eq) in 20 mL toluene was added slowly to a solution of **7·HBF₄** (1.070 g, 1.37 mmol, 1.00 eq) in 30 mL toluene. The yellow suspension was stirred at 90 C for 3 h and centrifuged after cooling to room temperature. All volatiles of the clear solution were removed in vacuo, the residue dissolved in 25 mL n-hexane and filtered over celite. The filtrate was evaporated and dried in high vacuum to obtain **7** (752 mg, 1.08 mmol, 79%) as pale yellow oil.
[C₂₂H₆₆N₁₅P₅] (695.74 g**·**mol⁻¹) ¹H-NMR (500.2 MHz, C₆D₆): *δ* (ppm) = 2.99 (d, ³*J*_{PH} = 11 Hz, 12H, *H3*), 2.79 (d, ³*J*_{PH} = 10 Hz, 36H, *H1*), 2.66 (d, ³*J*_{PH} = 10 Hz, 18H, *H2).* ¹³C{¹H}-NMR (125.8 MHz, C₆D₆): *δ* (ppm) = 39.0 (dd, *J*_{PC} = 5 Hz, *J*_{PC} =4 Hz, *C3),* 38.4 (dd, 2x *J*_{PC} = 4 Hz, *C1*), 37.7 (dd, *J*_{PC} = 4 Hz, *J*_{PC} =3 Hz, *C2*). ³¹P{¹H}-NMR (202.5 MHz, C₆D₆): *δ* (ppm) = 84.7 (dt, ²*J*_{PP} = 48 Hz, ²*J*_{PP} = 18 Hz, *P*^{III}), 19.4 (d, ²*J*_{PP} = 43 Hz, *P2),* 11.2 (d, ²*J*_{PP} = 18 Hz, *P1*), 1.0 (dd, 2x ²*J*_{PP} = 46 Hz, *P3).*³¹P-NMR (202.5 MHz, C₆D₆): *δ* (ppm) = 84.7 (dt, ²*J*_{PP} = 48 Hz, ²*J*_{PP} = 18 Hz, *P*^{III}), 19.7-19.1 (m, *P2*), 11.2 (br. s, *P1*), 1.0 (br. s, *P3*). LIFDI(+)-MS (THF): m/z (%) = 695.4 (100) [M]⁺. LIFDI(+)-HRMS: m/z [M]⁺ calcd. 695.43137, found 695.43108. IR (neat): *ṽ* (cm⁻¹) = 2991 (w, CH₃), 2867 (sh. m, CH₃), 2834 (s, CH₃), 2788 (s, CH₃), 1455 (m), 1281 (s), 1165 (vs), 1065 (m), 959 (vs), 810 (w), 719 (vs), 635 (m), 622 (m), 568 (s), 485 (s).

### General procedure for the preparation of nickeltricarbonyl complexes 9-11:

The nickeltricarbonyl complexes of **2, 3** and **4** were prepared as follows: A solution of the respective phosphine in toluene (5 mL) was added to a solution of tetracarbonylnickel in toluene (5 mL) at 0 °C. The mixture was warmed to room temperature, all volatiles were removed in vacuo, the residue dissolved in n-pentane (20 mL) and cleared via syringe filtration. Evaporation of the solvent and drying in high vacuum gave the respective nickeltricarbonyl complexes as colourless to pale yellow solids.

### [Tricarbonyl{tris[tris(dimethylamino)phosphazenyl]phosphine}nickel(0)] (9)

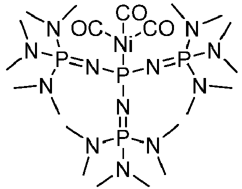

**2** (103 mg, 183 µmol, 1 eq) and tetracarbonylnickel (0.03 mL, 0.2 mmol, 1 eq) gave **9** (72 mg, 0.10 mmol, 56%) as pale yellow solid.
[C₂₁H₅₄N₁₂NiO₃P₄] (705.33 g**·**mol⁻¹) ¹H-NMR (500.2 MHz, C₆D₆): δ (ppm) = 2.64 (d, ³*J*_{PH} = 10 Hz, 54H). ¹³C{¹H}-NMR (125.8 MHz, C₆D₆): δ (ppm) = 203.4 (d, ²*J*_{PC} = 9 Hz, CO), 37.8 (d, ²*J*_{PC} = 4 Hz, N(*C*H₃)₂). ³¹P{¹H}-NMR (202.5 MHz, C₆D₆): *δ* (ppm) = 53.2 (q, ²*J*_{PP} = 18 Hz, PNi), 3.1 (d, ²*J*_{PP} = 18 Hz, P(dma)₃). LIFDI(+)-MS (toluene): m/z (%) = 704.3 (100) [M]⁺. LIFDI(+)-HRMS: m/z [M]⁺ calcd. 704.27458, found 704.27597. Elemental analysis: calcd. C 35.76%, H 7.72%, N 23.83%; found C 36.96%, H 7.72%, N 24.06%. IR (neat): *ṽ* (cm⁻¹) = 2997 (w, CH₃), 2871 (sh. m, CH₃), 2836 (m, CH₃), 2793 (m, CH₃), 2022 (m, CO), 1929 (vs, CO), 1480 (w), 1454 (m), 1409 (w), 1244 (s), 1190 (s), 1065 (m), 967 (vs), 775 (m), 722 (s), 572 (s), 486 (s), 471 (s), 444 (m).

### [Tricarbonyl{tris[tris(pyrrolidino)phosphazenyl]phosphine}nickel(0)] (10)

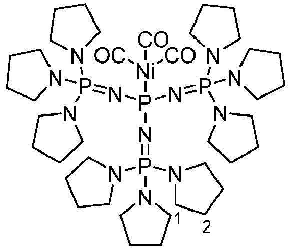

**3** (144 mg, 181 µmol, 1.0 eq) and tetracarbonylnickel (0.10 mL, 0.44 mmol, 2.4 eq) gave **10** as colourless solid. [C₃₉H₇₂N₁₂NiO₃P₄] (939.67 g**·**mol⁻¹) ¹H-NMR (300.2 MHz, C₆D₆): *δ* (ppm) = 3.37-3.31 (m, 36H, *H1),* 1.75-1.71 (m, 36H, *H2*). ¹³C{¹H}-NMR (75.5 MHz, C₆D₆): *δ* (ppm) = 203.9 (d, ²*J*_{PC} = 9 Hz, *C*O), 47.0 (d, ²*J*_{PC} = 5 Hz, *C1),* 26.8 (d, ³*J*_{PC} = 9 Hz, *C2).* ³¹P{¹H}-NMR (101.3 MHz, C₆D₆): *δ* (ppm) = 51.0 (q, ²*J*_{PP} = 21 Hz, PNi), -11.6 (d, ²*J*_{PP} = 21 Hz, P(pyrr)₃). LIFDI(+)-MS (toluene): m/z (%) = 797.5 (50) [M+H-Ni(CO)₃]⁺, 938.4 (100) [M]⁺. LIFDI(+)-HRMS: m/z [M]⁺ calcd. 938.41543, found 938.41557. IR (neat): *ṽ* (cm⁻¹) = 2959 (m, CH₂), 2861 (m, CH₂), 2019 (m, CO), 1928 (vs, CO), 1902 (sh. w), 1458 (w), 1305 (m), 1290 (m), 1227 (vs), 1196 (s), 1130 (s), 1074 (vs), 1007 (vs), 913 (w), 870 (w), 765 (w), 740 (w), 707 (w), 676 (w), 577 (s), 558 (s), 517 (w), 472 (s).

### [Tricarbonyl{[pentakis(dimethylamino)diphosphazenyl]bis[tris(dimethylamino)-phosphazenyl]phosphine}nickel(0)] (11)

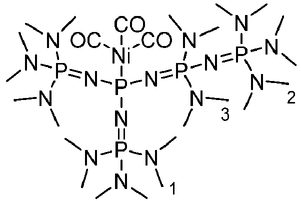

**7** (138 mg, 198 µmol, 1 eq) and tetracarbonylnickel (0.03 ml, 0.2 mmol, 1 eq) gave **11** (148 mg, 177 µmol, 89%) as colourless crystalline solid.
[C₂₅H₆₆N15NiO₃P₅] (838.47 g**·**mol⁻¹) ¹H-NMR (300.2 MHz, C₆D₆): *δ* (ppm) = 2.88 (d, ³*J*_{PH} = 11 Hz, 12H, *H3),* 2.71 (d, ³*J*_{PH} = 10 Hz, 36H, *H1*), 2.51 (d, ³*J*_{PH} = 10 Hz, 18H, *H2*). ¹³C{¹H}-NMR (75.5 MHz, C₆D₆): *δ* (ppm) = 204.0 (d, ²*J*_{PC} = 9 Hz, *C*O), 38.8 (d, ²*J*_{PC} = 4 Hz, *C3*), 37.9 (d, ²*J*_{PC} = 4 Hz, *C1),* 37.5 (d, ²*J*_{PC} = 4 Hz, *C2*). ³P{¹H}-NMR (101.3 MHz, C₆D₆): δ (ppm) = 48.6 (d, ²*J*_{PP} = 69 Hz, *P*Ni), 12.3 (d, ²*J*_{PP} = 52 Hz, *P2),* 1.24 (s, *P1),* -10.3 (dd, ²*J*_{PP} = 68 Hz, ²*J*_{PP} = 52 Hz, *P3*). LIFDI(+)-MS (benzene): m/z (%) = 696.4 (100) [M+H-Ni(CO)₃], 837.4 (29) [M]⁺. LIFDI(+)-HRMS: m/z [M]⁺ calcd. 837.35146, found 837.35139. Elemental analysis: calcd. C 35.81%, H 7.93%, N 25.06%; found C 35.34%, H 7.98%, N 24.73%. IR (neat): *ṽ* (cm⁻¹) = 3003 (w, CH₃), 2872 (m, CH₃), 2833 (m) CH₃), 2793 (m, CH₃), 2017 (m, CO), 1927 (vs, CO), 1898 (sh. w), 1482 (m), 1454 (m), 1285 (s), 1180 (vs), 1062 (m), 962 (vs), 820 (w), 770 (s), 723 (s), 705 (s), 624 (m), 582 (m), 564 (m), 525 (m), 493 (s), 467 (s), 438 (sh. m). XRD: The isolated product was suitable for single crystal X-ray structure determination.

### Tris[tris(dimethylamino)phosphazenyl]phosphine selenide (13)

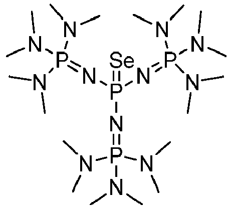

A solution of potassium bis(trimethylsilyl)amide (40 mg, 0.20 mmol, 1.0 eq) in toluene (5 mL) was added to a solution of **2·HBF₄** (126 mg, 194 µmol, 1.0 eq) in toluene (5 mL). After stirring for 1 h at room temperature, gray selenium (16 mg, 0.20 mmol, 1.0 eq) was added and stirred for 1 h at 90 °C. After cooling to room temperature the mixture was centrifuged, the supernatant clear solution separated and all volatiles were removed in vacuo. The residue was dissolved in *n*-pentane (10 mL) and cleared via syringe filtration. Removal of the solvent and drying in high vacuum gave **13** as pale yellow solid.
[C₁₈H₅₄N₁₂P₄Se] (642.27 g**·**mol⁻¹) ¹H-NMR (300.2 MHz, C₆D₆): *δ* (ppm) = 2.79 (d, ³*J*_{PH} = 10 Hz, 54H). ¹³C{¹H}-NMR (125.8 MHz, C₆D₆): *δ* (ppm) = 38.1 (d, ²*J*_{PC} = 4 Hz). ³¹P{¹H}-NMR (121.5 MHz, C₆D₆): *δ* (ppm) = 13.0 (d, ²*J*_{PP} = 35 Hz, *P*(dma)₃), -6.7 (q, ²*J*_{PP} = 35 Hz, ¹*J*_{PSe} = 645 Hz (satellites), PSe). ⁷⁷Se{¹H}-NMR (95.4 MHz, C₆D₆): *δ* (ppm) = 137.9 (d, ¹*J*_{PSe} = 645 Hz). LIFDI(+)-MS (toluene): m/z (%) = 642.3 (100) [M]⁺. LIFDI(+)-HRMS: m/z [M]⁺ calcd. 642.27108, found 642.26810. Elemental analysis: calcd. C 33.70%, H 8.48%, N 26.20%; found C 34.09%, H 8.46%, N 25.66%.

### Tris[tris(pyrrolidino)phosphazenyl]phosphine selenide (14)

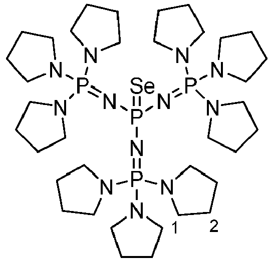

A solution of potassium bis(trimethylsilyl)amide (34 mg, 0.17 mmol, 1.3 eq) in toluene (10 mL) was added to a solution of **3**·**HBF₄** (114 mg, 129 µmol, 1.0 eq) in toluene (10 mL) and stirred for 1 h at room temperature. Gray selenium (18 mg, 0.23 mmol, 1.8 eq) was added and the mixture stirred at room temperature overnight. The brown mixture was centrifuged and all volatiles of the clear yellow solution were removed in vacuo. The residue was dissolved in n-pentane (20 mL) and cleared via syringe filtration. The solvent was evaporated slowly and colourless crystalline **14** dried in high vacuum.
[C₃₆H₇₂N₁₂P₄Se] (875.91 g**·**mol⁻¹) ¹H-NMR (500.2 MHz, C₆D₆): *δ* (ppm) = 3.52-3.48 (m, 36H, *H1*), 1.83-1.80 (m 36H, *H2*). ¹³C{¹H}-NMR (125.8 MHz, C₆D₆): *δ* (ppm) = 47.3 (d, ²*J*_{PC} = 4 Hz, *C2),* 26.9 (d, ³*J*_{PC} = 9 Hz, *C2*). ³¹P{¹H}-NMR (202.5 MHz, C₆D₆): *δ* (ppm) = 0.6 (d, ²*J*_{PP} = 22 Hz, *P*(pyrr)₃), -5.5 (q, ²*J*_{PP} = 22 Hz, ¹*J*_{PSe} = 628 Hz (satellites), PSe). ⁷⁷Se{¹H}-NMR (95.4 MHz, C₆D₆): *δ* (ppm) = 190.9 (d, ¹*J*_{PSe} = 628 Hz). LIFDI(+)-MS (toluene): m/z (%) = 876.4 (100) [M]⁺. LIFDI(+)-HRMS: m/z [M]⁺ calcd. 876.41216, found 876.41236. Elemental analysis: calcd. C 49.37%, H 8.29%, N 19.19%; found C 49.30%, H 8.38%, N 18.47%. XRD: The isolated product was suitable for single crystal X-ray structure determination.

### [Pentakis(dimethylamino)diphosphazenyl]bis[tris(dimethylamino)phosphazenyl]-phosphine selenide (15)

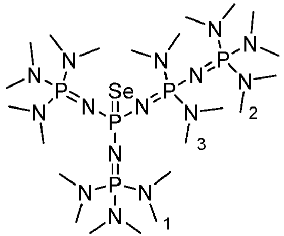

Toluene (20 mL) was added to a mixture of **7**·**HBF₄** (170 mg, 217 µmol, 1.0 eq) and potassium bis(trimethylsilyl)amide (44 mg, 0.22 mmol, 1.0 eq) and the mixture was stirred for 1 h at room temperature and 1 h at 90 °C. Gray selenium (19 mg, 0.24 mmol, 1.1 eq) was added and stirred for one additional hour at 90 °C. The solid was centrifuged off and all volatiles of the solution were removed in vacuo. The residue was dissolved in n-pentane (10 mL), cleared via syringe filtration and dried in high vacuum. **15** was obtained as pale yellow solid.
[C₂₂H₆₆N₁₅P₅Se] (775.35 g**·**mol⁻¹) ¹H-NMR (300.2 MHz, C₆D₆): *δ* (ppm) = 2.98 (d, ³*J*_{PH} = 11 Hz, 12H, *H3),* 2.83 (d, ³*J*_{PH} = 10 Hz, 36H, *H1*), 2.65 (d, ³*J*_{PH} = 10 Hz, 18H, *H2).* ¹³C{¹H}-NMR (75.5 MHz, C₆D₆): *δ* (ppm) = 38.9 (d, ²*J*_{PC} = 4 Hz, *C3*), 38.2 (d, ²*J*_{PC} = 4 Hz, *C1*), 37.6 (d, ²*J*_{PC} = 4 Hz, *C2).* ³¹P{¹H}-NMR (121.5 MHz, C₆D₆): *δ* (ppm) = 19.0 (d, ²*J_{PP}* = 44 Hz, *P2*), 11.2 (d, ²*J*_{PP} = 42 Hz, *P1*), -6.9 (dd, ²*J*_{PP} = 44 Hz, ²*J*_{PP} = 12 Hz, *P3*), -13.1 (dt, ²*J*_{PP} = 42 Hz, ²*J*_{PP} = ¹²Hz, ¹*J*_{PSe} = 631 Hz (satellites), *P*Se). ⁷⁷Se{¹H}-NMR (57.3 MHz, C₆D₆): *δ* (ppm) = 127.6 (d, ¹*J*_{PSe} = 631 Hz). LIFDI(+)-MS (benzene): m/z (%) = 775.3 (100) [M]⁺. LIFDI(+)-HRMS: m/z [M]⁺ calcd. 775.34801, found 775.34666.

### [{Tris[tris(dimethylamino)phosphazenyl]phosphine}(triphenylphosphine)platinum(0)] (17)

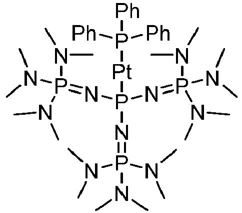

Toluene (10 mL) was added to a mixture of **2·HBF₄** (173 mg, 265 µmol, 1.0 eq) and potassium bis(trimethylsilyl)amide (58 mg, 0.29 mmol, 1.1 eq) and stirred for 90 min at room temperature. Precipitated potassium tetrafluoridoborate was separated by centrifugation and the supernatant added to a solution of (*η*2-ethylene)bis(triphenylphosphane)platinum(0) (204 mg, 273 µmol, 1.0 eq) in toluene (5 mL) and stirred over weekend at room temperature. All volatiles were removed in vacuo, the residue dissolved in n-pentane (10 mL) and filtered. The filtrate was stored at -25 °C, the resulting crystals separated by decantation, washed with cold *n*-pentane (4 mL) and dried in high vacuum to isolate **17** as yellow crystals containing one equivalent n-pentane as cocrystallizate.
[C₃₆H₆₉N₁₂P₅Pt] (1019.98 g**·**mol⁻¹) ¹H-NMR (300.3 MHz, THF-*d*₈): *δ* (ppm) = 7.72-7.66 (m, 6H, *m-H*), 7.21-7.18 (m, 9H, *o,p-H*), 2.76 (d, ³*J*_{PH} = 10 Hz, 54H, C*H*₃). ¹³C{¹H}-NMR (125.8 MHz, C₆D₆): *δ* (ppm) = 140.2 (d, ¹*J*_{PC} = 37 Hz, *i-C*), 134.9 (d, ³*J*_{PC} = 13 Hz, *m-C*), 128.3 (overlapped with the solvent signal, *p-C*), 127.6 (d, ²*J*_{PC} = 9 Hz, *o-C*), 38.3 (d, ²*J*_{PC} = 3 Hz, CH₃). ³¹P{¹H}-NMR (121.5 MHz, THF-*d*₈): *δ* (ppm) = 87.8 (dq, ²*J*_{PP} = 549 Hz, ²*J*_{PP} = 26 Hz, ¹*J*_{PPt} = 6147 Hz (satellites), N₃*P*Pt), 47.1 (d, ²*J*_{PP} = 549 Hz, ¹*J*_{PPt} = 3229 Hz (satellites), Ph₃*P*Pt), 12.3 (d, ²*J*_{PP} = 26 Hz, *P*(dma)₃). ¹⁹⁵Pt{¹H}-NMR (64.54 MHz, THF-*d*₈): *δ* (ppm) = -6238 (dd, *¹J*_{PPt} = 6153 Hz, *¹J*_{PPt} = 3236 Hz). LIFDI(+)-MS (n-hexane): m/z (%) = 1019.4 (100) [M]⁺. LIFDI(+)-HRMS: m/z [M]⁺ calcd. 1019.41039, found 1019.41330. XRD: The isolated crystalline product was suitable for single crystal X-ray structure determination.

### [{Tris[tris(pyrrolidino)phosphazenyl]phosphine}(triphenylphosphine)platinum(0)] (18)

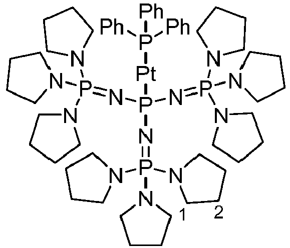

Toluene (15 mL) was added to a mixture of **3·HBF₄** (242 mg, 274 µmol, 1.0 eq) and potassium bis(trimethylsilyl)amide (60 mg, 0.30 mmol, 1.1 eq) and stirred for 90 min at room temperature. Precipitated potassium tetrafluoridoborate was separated by centrifugation and the supernatant added to a solution of (*η*²-ethylene)bis(triphenylphosphane)platinum(0) (204 mg, 273 µmol, 1.0 eq) in toluene (5 mL) and stirred for 3 h at 90 °C. All volatiles were removed in vacuo, the residue dissolved in n-hexane (20 mL) and filtered. The filtrate was stored at -35 °C, the resulting crystals separated by decantation, washed with cold *n*-pentane (2 mL) and dried in high vacuum to isolate **18** as yellow crystals.
[C₅₄H₈₇N₁₂P₅Pt] (1254.33 g**·**mol⁻¹) ¹H-NMR (300.3 MHz, THF-*d*₈): *δ* (ppm) = 7.70-7.64 (m, 6H, *m-H*), 7.19-7.17 (m, 9H, *o,p-H*), 3.41-3.35 (m, 36H, *H1*), 1.72-1.64 (m, 36H, *H2*). ¹³C{¹H}-NMR (75.7 MHz, C₆D₆): *δ* (ppm) = 140.8 (dd, ¹*J*_{PC} = 35 Hz, ³*J*_{PC} = 2 Hz, *i-C*), 135.0 (dd, ³J_{PC} = 14 Hz, ⁵*J*_{PC} = 2 Hz, *m-C*), 128.3 (d, ⁴*J*_{PC} = 1 Hz, *p-C*), 127.5 (d, ²*J*_{PC} = 9 Hz, *o-C*), 47.7 (d, ²*J*_{PC} = 4 Hz, *C1),* 27.0 (d, ³*J*_{PC} = 9 Hz, *C2*). ³¹P{¹H}-NMR (121.5 MHz, THF-*d*₈): *δ* (ppm) = 87.9 (dq, ²*J*_{PP} = 553 Hz, ²*J*_{PP} = 12 Hz, ¹*J*_{PPt} = 6222 Hz (satellites), N₃*P*Pt), 45.9 (dd, ²*J*_{PP} = 553 Hz, ⁴*J*_{PP} = 2 Hz, ¹*J*_{PPt} = 3185 Hz (satellites), Ph₃*P*Pt), -0.6 (dd, ²*J*_{PP} = 12 Hz, ⁴*J*_{PP} = 1 Hz, *P*(dma)₃). ¹⁹⁵Pt{¹H}-NMR (64.54 MHz, THF-*d*₈): *δ* (ppm) = -6219 (dd, ¹*J*_{PPt} = 6225 Hz, ¹*J*_{PPt} = 3183 Hz). LIFDI(+)-MS (n-hexane): m/z (%) = 1253.6 (100) [M]⁺. LIFDI(+)-HRMS: m/z [M]⁺ calcd. 1253.55124, found 1253.55229. Elemental analysis: calcd. C 51.71 %, H 6.99%, N 13.40%; found C 51.84%, H 6.96%, N 13.78%.

### Deprotonation attempts of (dma)P₆P·HBF₄ (4·HBF₄)

Several bases were testet for deprotonation of **4-HBF₄,** such as lithium di-*iso-*propylamid, potassium bis(trimethylsilyl)amide, potassium hydrid, benzyl potassium, elemental potassium and *n-* or *t-* butyllithium, which showed either no reaction or decomposition. Only excess of sodium amide in THF lead to a mixture of free **4** and **4·HBF₄** (Figure S1). Finally potassium pyrrolidid in toluene fully deprotonated the starting material (Figure S2) for consecutive reactions but isolation of the free base was not possible.

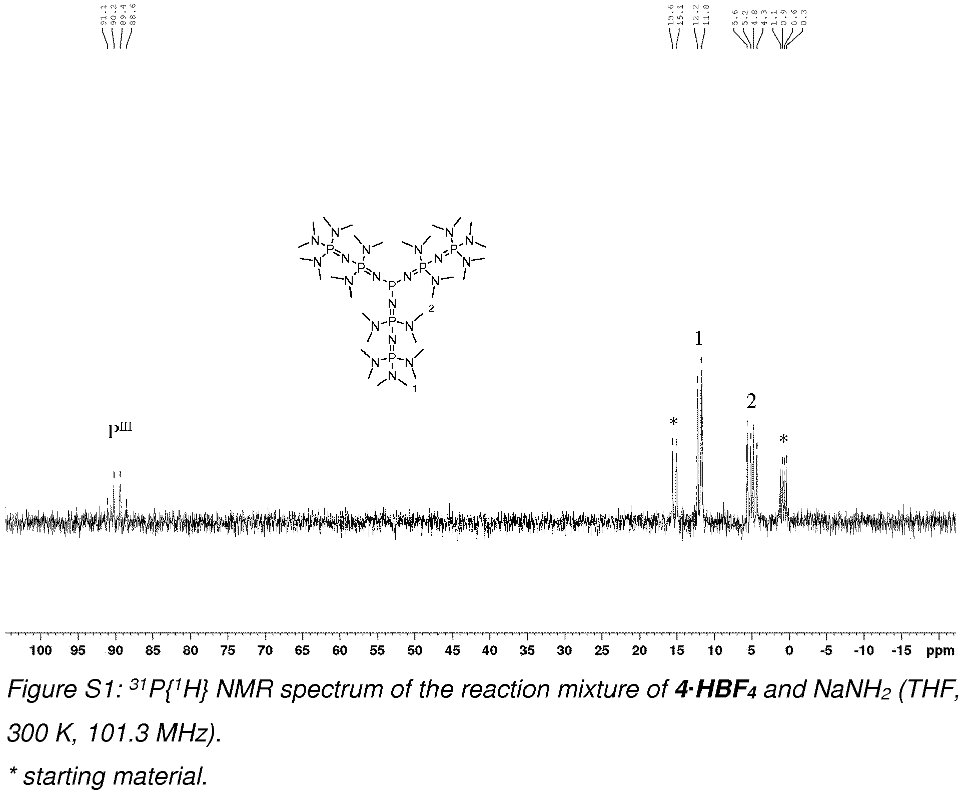

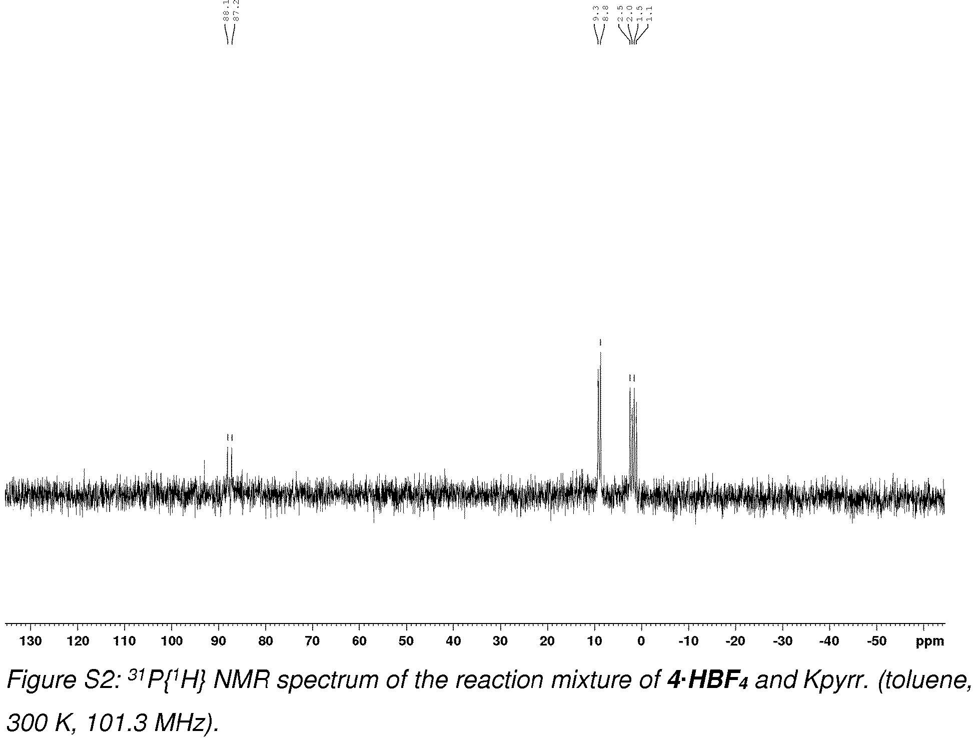

### [Tricarbonyl{tris[pentakis(dimethylamino)diphosphazenyl]phosphine}nickel(0)] (12)

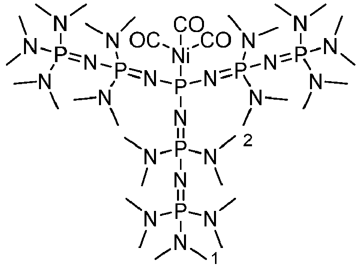

**4**·**HBF₄** (49 mg, 47 µmol, 1 eq) was dissolved in toluene (5 mL) and cooled to 0 °C. A solution of potassium pyrrolidid (5 mg, 0.05 mmol, 1 eq) in toluene (7 mL) was added slowly, the mixture allowed to warm to room temperature and added afterwards to a solution of tetracarbonylnickel (0.01 mL, 0.08 mmol, 1 eq) in toluene (8 mL). All volatiles were removed in vacuo the residue dissolved in n-pentane (10 mL) and and cleared via syringe filtration. The solvent was evaporated and the residue used for analytics. [C₃₃H₉₀N₂₁NiO₃P₇] (1104.74 g·mol⁻¹) ³¹P{¹H}-NMR (101.3 MHz, C₆D₆): *δ* (ppm) = 46.4 (q, ²*J*_{PP} = 23 Hz, *P*Ni), 7.4 (d, ²*J*_{PP} = 56 Hz, *P1*), -13.9 (dd, ²*J*_{PP} = 56 Hz, ²*J*_{PP} = 23 Hz, *P2*). IR (neat): *ṽ* (cm⁻¹) = 2015 (w, CO), 1926 (s, CO). Since no pure product could be isolated, the IR spectrum was calculated to ensure the correct bands were assigned.

### Tris[pentakis(dimethylamino)diphosphazenyl]phosphine selenide (16)

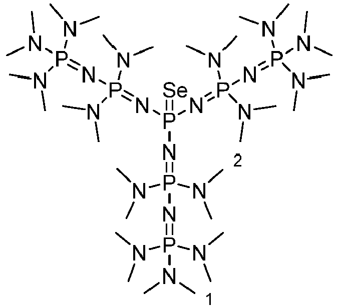

**4**·**HBF₄** (49 mg, 47 µmol, 1 eq) was dissolved in toluene (5 mL) and cooled to 0 °C. A solution of potassium pyrrolidid (5 mg, 0.05 mmol, 1 eq) in toluene (7 mL) was added slowly, the mixture allowed to warm to room temperature and added afterwards to a suspension of gray selenium (4 mg, 0.05 mmol, 1 eq) in toluene (8 mL). The mixture was stirred at room temperature over night, all volatiles were removed in vacuo the residue dissolved in n-pentane (10 mL) and and cleared via syringe filtration. The solvent * s evaporated and the residue dissolved in C₆D₆.
[C₃₀H₉₀N₂₁P₇Se] (1040.97g·mol⁻¹) ³¹P{¹H}-NMR (202.5 MHz, C₆D₆): δ (ppm) = 12.1 (d, ²J_{PP} = 54 Hz, *P1),* -9.7 (dd, ²*J*_{PP} = 54 Hz, ²*J*_{PP} = 21 Hz, *P2),* -17.6 (q, ²*J*_{PP} = 21 Hz, ¹*J*_{PSe} = 608 Hz (satellites), PSe). ⁷⁷Se-NMR (95.4 MHz, C₆D₆): δ (ppm) = 120.4 (d, ¹*J*_{PSe} = 609 Hz).LIFDI(+)-MS (C₆D₆): m/z (%) = 978.6 (100) [M+O-Se], 1039.5 (27) [M]⁺. LIFDI(+)-HRMS: m/z [M]⁺ calcd. 1039.50244, found 1039.50367.

### [(Chlorido)cyclooctadien{tris[tris(dimethylamino)phosphazenyl]phosphine}rhodium(I)]

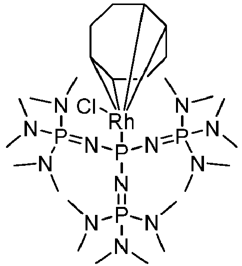

A (dma)P₃P containing solution (5 mL, 155 µmol, 2.0 eq), prepared according to the general procedure, was added to a solution of [(chlorido)(cyclooctadien)ruthenium(I)] dimer (39 mg, 79 µmol, 1.0 eq) in toluene (5 mL). All volatiles were removed in vacuo, the residue dissolved in *n*-pentane (15 mL) and cleared via syringe filter. Drying in high vacuum gave [(chlorido)cyclooctadien{tris-[tris(dimethylamino)phosphazenyl]phosphane}rhodium(I)] as intense yellow solid.
[C₂₆H₆₆ClN₁₂RhP₄] (809.15 g·mol⁻¹) ¹H-NMR (500.1 MHz, C₆D₆): δ (ppm) = 5.56 (d, *J* = 3 Hz, 2H, C*H*), 3.91 (dd, *J* = 3 Hz, 2H, CH) 2.74 (d, ³*J*_{PH} = 10 Hz, 54H, N(C*H*₃)₂), 2.58-2.53 (m, 2H, CH₂), 2.42-2.35 (m, 2H, C*H*₂), 2.14-2.03 (m, 4H, C*H*₂). ¹³C{¹H}-NMR (125.8 MHz, C₆D₆): *δ* (ppm) = 99.5 (dd, ¹*J*_{RhC} = 20 Hz, ²*J*_{PC} = 6 Hz, *C*H), 66.8 (d, ¹*J*_{RhC} = 16 Hz, CH), 38.1 (d, ²*J*_{PC} = 5 Hz, N(*C*H₃)₂), 34.0 (d, ²*J*_{RhC} = 3 Hz, CH₂), 29.4 (d, ²*J*_{RhC} = 3 Hz, *C*H₂). ³¹P{¹H}-NMR (202.5 MHz, C₆D₆): *δ* (ppm) = 26.1 (d, ¹*J*_{PRh} = 179 Hz, RhP), 3.7 (s, *P*(dma)₃). LIFDI(+)-MS (toluene): m/z (%) = 773.3 (100) [M-Cl]⁺, 808.3 (20) [M]⁺. LIFDI(+)-HRMS: m/z [M]⁺ calcd. 808.32274, found 808.32282. Elemental analysis: calcd. C 38.59%, H 8.22%, N 20.77%; found C 38.16%, H 8.06%, N 18.63%. XRD: For single crystal X-ray structure determination suitable single crystals were obtained by slowly cooling a concentrated solution in n-pentane.

### [(Allyl)chlorido{tris[tris(pyrrolidino)phosphazenyl]phosphane}palladium(II)]

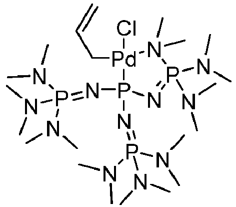

A (dma)P₃P containing solution (5 mL, 155 µmol, 1.9 eq), prepared according to the general procedure, was added to a solution of [(allyl)(chlorido)palladium(II)] dimer (30 mg, 82 µmol, 1.0 eq) in toluene (5 mL). All volatiles were removed in vacuo, the residue dissolved in *n*-pentane (15 mL) and cleared via syringe filter. Drying in high vacuum gave [(allyl)chlorido{tris[tris(pyrrolidino)phosphazenyl]phosphane}-palladium(II)] as yellow crystalline solid, which turned out to be not stable in solution, wherefore no analytics other than ³¹P NMR spectroscopy and XRD were possible.
[C₂₁H₅₉ClN₁₂PdP₄] (745.55 g·mol⁻¹) ³¹P{¹H}-NMR (202.5 MHz, C₆D₆): *δ* (ppm) = 25.7 (q, ²*J*_{PP} = 3 Hz, PPd), 12.6 (br. s, *P*(dma)₃). XRD: The obtained crystalline solid was suitable for single crystal X-ray structure determination.

### [{Tris[tris(dimethylamino)-phosphazenyl]phosphane}(triphenylphosphane)palladium(0)]

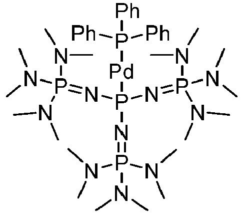

A (dma)P₃P containing solution (14 mL, 129 µmol, 2.4 eq), prepared according to the general procedure, was added to a suspension of di-chloridobis(triphenylphosphane)palladium(II) (58.9 mg, 83.9 µmol, 1.0 eq) in toluene (5 mL) and stirred overnight at room temperature. The orange suspension was centrifuged and the clear supernatant evaporated to dryness. The residue was dissolved in *n*-hexane (20 mL), filtered and the filtercake extracted again with n-hexane (2x 20 mL). The filtrate was reduced to a minimum and stored at -25 °C to isolate [{tris[tris(dimethylamino)-phosphazenyl]phosphane}(triphenylphosphane)palladium(0)] as orange crystals containing one equivalent n-pentane as cocrystallizate.
[C₃₆H₆₉N₁₂P₅Pd] (931.32 g·mol⁻¹) ¹H-NMR (300.2 MHz, C₆D₆): *δ* (ppm) = 7.96-7.90 (m, 6H, *m-H*), 7.19-7.14 (m, 6H, *o-H*), 7.11-7.06 (m, 3H, *p-H*), 2.85 (d, ³*J*_{PH} = 10 Hz, 54H, C*H*₃). ¹³C{¹H}-NMR (75.5 MHz, C₆D₆): *δ* (ppm) = 140.9 (d, ¹*J*_{PC} = 23 Hz, *i-C*), 134.9 (d, ³*J*_{PC} = 17 Hz, *m-C*), 128.2 (overlapped with the solvent signal, *p-C*), 127.9 (d, ²*J*_{PC} = 9 Hz, *o-C*), 38.3 (dd, *J*_{PC} = 4 Hz, *J*_{PC} = 2 Hz, *C*H₃). ³¹P{¹H}-NMR (121.5 MHz, C₆D₆): *δ* (ppm) = 61.7 (dq, ²*J*_{PP} = 401 Hz, ²*J*_{PP} = 23 Hz, Pd*P*N₃), 26.5 (d, ²*J*_{PP} = 400 Hz, Pd*P*Ph₃), 11.2 (d, ²*J*_{PP} = 24 Hz, *P*(dma)₃). XRD: The isolated crystalline product was suitable for single crystal X-ray structure determination.

### [Chlorido{tris[tris(pyrrolidino)phosphazenyl]phosphane}gold(I)]

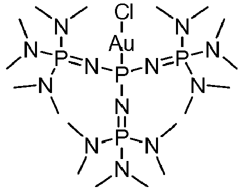

A (dma)P₃P containing solution (20 mL, 518 µmol, 1.00 eq), prepared according to the general procedure, was added to a suspension of [(chlorido)(triphenylphosphane)gold(I)] (256 mg, 517 µmol, 1.00 eq) in toluene (10 mL). All volatiles were removed in vacuo, the residue dissolved in boiling n-hexane (20 mL) and filtered hot. [Chlorido{tris[tris(pyrrolidino)phosphazenyl]phosphane}gold(I)] (340 mg, 428 µmol, 83%) was crystallized at -25 °C as colourless solid and washed once with cold n-pentane (5 mL).
[C₁₈H₅₄AuClN₁₂P₄] (795.03 g·mol⁻¹) ¹H-NMR (300.3 MHz, C₆D₆): *δ* (ppm) = 2.65 (d, ³*J*_{PH} = 10 Hz, 54H). ¹³C{¹H}-NMR (75.5 MHz, C₆D₆): *δ* (ppm) = 37.9 (d, ²*J*_{PC} = 4 Hz). ³¹P{¹H}-NMR (121.5 MHz, C₆D₆): *δ* (ppm) = 22.3 (q, ²*J*_{PP} = 40 Hz, PAu), 15.3 (d, ²*J*_{PP} = 40 Hz, *P*(dma)₃). LIFDI(+)-MS (toluene): m/z (%) = 597.3 (100) [M-Au]⁺, 794.3 (70) [M]⁺. LIFDI(+)-HRMS: m/z [M]⁺ calcd. 794.28989, found 794.28457. Elemental analysis: calcd. C 27.19%, H 6.85%, N 21.14%; found C 27.35%, H 6.80%, N 21.51 %. XRD: The isolated crystalline product was suitable for single crystal X-ray structure determination.

### NMR Studies

### NMR Titration Experiments

The p*K*_{BH}⁺ values of three phosphine super bases (dma)P₃P (**2**), (pyrr)P₃P (**3**), (dma)P₄P (7) were determined via NMR titration. The general procedure for NMR titration experiments for the determination of p*K*_{BH}⁺ values is known to the person skilled in the art. Adding to the initial amount of a super base in its protonated form a similar amount of a Schwesinger base in THF, an equilibrium in competition of protons in solution was quickly reached. In order to have quantitative ³¹P NMR spectra relaxation times of all ³¹P signals were first determined using the standard inversion recovery procedure. Quantitative ³¹P NMR spectra were thus recorded by inverse gated decoupling method with a relaxation delay of 30 s. Therefore, signal intensities of the central phosphorus (P^{III}) in its free and protonated form, as well as the terminal phosphorus (P^{V}) of the Schwesinger base in its free and protonated form, revealed the molar ratio of the different species at equilibrium. On the bases of these signal intensities equilibrium constants were thus calculated and the unknown p*K*_{BH}⁺ values determined.

A mixture of (dma)P₃P·HBF₄ and (dma)P₄-*t*Bu (p*K*_{BH}⁺ (THF) = 33.9) in THF did show a neat signal at 82 ppm which was due to P^{III} in its free form, whereas in a similar experiment of (pyrr)P₃P·HBF₄ or (dma)P₄P·HBF₄ mixed with (dma)P₄-*t*Bu, no signal corresponding to the free base could be observed. This meant that a basicity of both higher than that of (dma)P₄-*t*Bu could be expected and a stronger base was necessary for the purpose. Thus, experiments were then carried out with (pyrr)P₄-*t*Bu p*K*_{BH}⁺ (THF) = 35.3) in THF.

**Results.** Results of thermal dynamic basicity determination are shown in Tables S1-S3. Thus, the p*K*_{BH}⁺ of THF scale of super bases **2, 3** and **7** were determined to be 34.9 ± 0.2, 36.7 ± 0.1 and 37.2 ± 0.1.

**Table S1: ³¹P NMR titration experiments for pK_{BH}⁺ determination of (dma)P₃P (2).**

| Experiment 1 | **2**·HBF₄ | (dma)P₄-*t*Bu | **2** | (dma)P₄-*t*Bu·HBF₄ |
|---|---|---|---|---|
| Initial weight / mg | 6.478 | 6.337 | 0.00 | 0.00 |
| Initial amount / µmol | 9.96 | 10.00 | 0.00 | 0.00 |
| Final amount / µmol | 7.66 | 7.70 | 2.30 | 2.30 |
| p*K*_{BH}⁺ (**2**) = p*K*_{BH}⁺ ((pyrr)P₄-*t*Bu) - log *K* = 33.9 - log [2.30²÷(7.65×7.70)] = 35.0 | | | | |

| Experiment 2 | **2**·HBF₄ | (dma)P₄-*t*Bu | **2** | (dma)P₄-*t*Bu·HBF₄ |
|---|---|---|---|---|
| Initial weight / mg | 5.976 | 5.941 | 0.00 | 0.00 |
| Initial amount / µmol | 9.19 | 9.38 | 0.00 | 0.00 |
| Final amount / µmol | 7.24 | 7.43 | 1.95 | 1.95 |
| p*K*_{BH}⁺ (**2**) = p*K*_{BH}⁺ ((pyrr)P₄-*t*Bu) - log *K* = 33.9 - log [1.95²÷(7.24×7.43)] = 35.1 | | | | |

| Experiment 3 | **2·**HBF₄ | (pyrr)P₄-*t*Bu | **2** | (pyrr)P₄-*t*Bu·HBF₄ |
|---|---|---|---|---|
| Initial weight / mg | 7.276 | 9.007 | 0.00 | 0.00 |
| Initial amount / µmol | 11.19 | 10.38 | 0.00 | 0.00 |
| Final amount / µmol | 4.60 | 3.16 | 6.59 | 7.22 |
| p*K*_{BH}⁺ (**2**) = p*K*_{BH}⁺ ((pyrr)P₄-*t*Bu) - log *K* = 35.3 - log [(6.59×7.22)÷(4.60×3.79)] = 34.9 | | | | |

| Experiment 4 | **2·**HBF₄ | (pyrr)P₄-*t*Bu | **2** | (pyrr)P₄-*t*Bu·HBF₄ |
|---|---|---|---|---|
| Initial weight / mg | 6.958 | 9.195 | 0.00 | 0.00 |
| Initial amount / µmol | 10.70 | 10.59 | 0.00 | 0.00 |
| Final amount / µmol | 4.02 | 3.47 | 6.68 | 7.12 |
| p*K*_{BH}⁺ (**2**) = p*K*_{BH}⁺ ((pyrr)P₄-*t*Bu) - log *K* = 35.3 - log [(6.68×7.12)÷(4.02×3.47)] = 34.8 | | | | |

**Table S2: ³¹P NMR titration experiments for pK_{BH}⁺ determination of (pyrr)P₃P (3).**

| Experiment 1 | **3·**HBF₄ | (pyrr)P₄-*t*Bu | **3** | (pyrr)P₄-*t*Bu·HBF₄ |
|---|---|---|---|---|
| Initial weight / mg | 5.284 | 5.533 | 0.00 | 0.00 |
| Initial amount / µmol | 5.97 | 6.37 | 0.00 | 0.00 |
| Final amount / µmol | 5.33 | 4.80 | 0.64 | 1.57 |
| p*K*_{BH}⁺ (**2**) = p*K*_{BH}⁺ ((pyrr)P₄-*t*Bu) - log *K* = 35.3 - log [(0.64×1.57)÷(5.33×4.80)] = 36.7 | | | | |

| Experiment 2 | **3·**HBF₄ | (pyrr)P₄-*t*Bu | **3** | (pyrr)P₄-*t*Bu·HBF₄ |
|---|---|---|---|---|
| Initial weight / mg | 5.763 | 6.130 | 0.00 | 0.00 |
| Initial amount / µmol | 6.51 | 7.06 | 0.00 | 0.00 |
| Final amount / µmol | 5.63 | 5.63 | 0.88 | 1.43 |
| p*K*_{BH}⁺ (**3**) = p*K*_{BH}⁺ ((pyrr)P₄-*t*Bu) - log *K* = 35.3 - log [(0.88×1.43)÷(5.63×5.63)] = 36.7 | | | | |

| Experiment 3 | **3·**HBF₄ | (pyrr)P₄-*t*Bu | **3** | (pyrr)P₄-*t*Bu·HBF₄ |
|---|---|---|---|---|
| Initial weight / mg | 5.791 | 6.049 | 0.00 | 0.00 |
| Initial amount / µmol | 6.55 | 6.97 | 0.00 | 0.00 |
| Final amount / µmol | 5.62 | 5.53 | 0.93 | 1.44 |
| p*K*_{BH}⁺ (**3**) = p*K*_{BH}⁺ ((pyrr)P₄-*t*Bu) - log *K* = 35.3 - log [(0.93×1.44)÷(5.62×5.53)] = 36.7 | | | | |

**Table S3: ³¹P NMR titration experiments for pK_{BH}⁺ determination of (dma)P₄P (7).**

| Experiment 1 | **7·**HBF₄ | (pyrr)P₄-*t*Bu | **7** | (pyrr)P₄-*t*Bu·HBF₄ |
|---|---|---|---|---|
| Initial weight / mg | 6.517 | 7.309 | 0.00 | 0.00 |
| Initial amount / µmol | 8.32 | 8.42 | 0.00 | 0.00 |
| Final amount / µmol | 7.92 | 6.74 | 0.39 | 1.68 |
| p*K*_{BH}⁺ (**7**) = p*K*_{BH}⁺ ((pyrr)P₄-*t*Bu) - log *K* = 35.3 - log [(0.39×1.68)÷(7.92×6.74)] = 37.2 | | | | |

| Experiment 2 | **7·**HBF₄ | (pyrr)P₄-*t*Bu | **7** | (pyrr)P₄-*t*Bu·HBF₄ |
|---|---|---|---|---|
| Initial weight / mg | 8.951 | 12.705 | 0.00 | 0.00 |
| Initial amount / µmol | 11.42 | 14.65 | 0.00 | 0.00 |
| Final amount / µmol | 10.67 | 12.35 | 0.75 | 2.30 |
| p*K*_{BH}⁺ (**7**) = p*K*_{BH}⁺ ((pyrr)P₄-*t*Bu) - log *K =* 35.3 - log [(0.75×2.30)÷(10.67×12.35)] = 37.2 | | | | |

| Experiment 3 | **7·**HBF₄ | (pyrr)P₄-*t*Bu | **7** | (pyrr)P₄-*t*Bu·HBF₄ |
|---|---|---|---|---|
| Initial weight / mg | 9.730 | 14.320 | 0.00 | 0.00 |
| Initial amount / µmol | 12.42 | 16.50 | 0.00 | 0.00 |
| Final amount / µmol | 11.54 | 13.91 | 0.88 | 2.59 |
| p*K*_{BH}⁺ (**7**) = p*K*_{BH}⁺ ((pyrr)P₄-*t*Bu) - log *K* = 35.3 - log [(0.88×2.59)÷(11.54×15.62)] = 37.2 | | | | |

### Crystallographic Details

Data were collected with a Bruker D8 QUEST area detector diffractometer equipped with MοK_{α} radiation, a graded multilayer mirror monochromator (λ = 0.71073 Å) and a PHOTON-100 CMOS detector or with a Stoe STADIVARI diffractometer equipped with CuK_{α} radiation, a graded multilayer mirror monochromator (λ = 1.54178 Å) and a DECTRIS PILATUS 300K detector both using an oil-coated shock-cooled crystal at 100(2) K. Data collection, reduction, cell refinement and semi-empirical absorption correction (multi-scan) were performed within Bruker Apex3 or Stoe X-Area. Structures were solved with dual-space methods using ShelXT and refined against F² with ShelXL, all within the user interface of WinGX and ShelXLe. Carbon bonded hydrogen atoms were calculated in their idealized positions and refined with fixed isotropic thermal parameters. Hydrogen atoms connected to heteroatoms were located on the Fourier map and refined isotropically. All molecular structures were illustrated with Diamond 4 using thermal ellipsoids at the 50% probability level.

The corresponding CIF files providing full information concerning the molecular structures and experimental conditions are deposited at the Cambridge Crystallographic Data Center.

The scope of the invention can therefore be summarized as follows:
The invention comprises a Metal complex or semi-metal complex according to formula **la:**

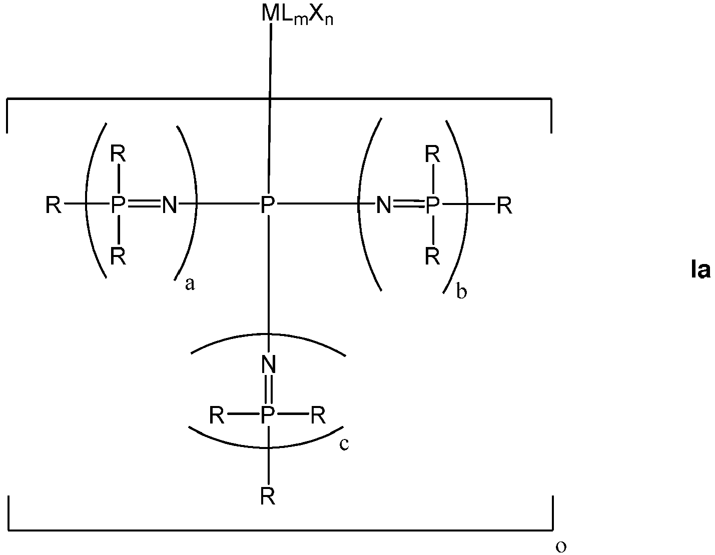

The Metal complex or semi-metal complex according to formula **Ia** is characterized in that
- the metal or semi-metal M is chosen from the list comprising the metals resp. semi-metals
   Fe, Co, Ni, Ru, Rh, Pd, Os, Ir, Pt, Sc, Y, La, Ti, Zr, Hf, V, Nb, Ta, Cr, Mo, W, Mn, Re, Cu, Ag, Au, Zn, Cd, Hg, Al, Ga, In, TI, Si, Ge, Sn, Pb, As, Sb, Bi, Se, Te, Ce, Pr, Nd, Pm, Sm, Eu, Gd, Tb, Dy, Ho, Er, Tm, Yb, Lu, whereat the oxidation number of metal or semi-metal M may be 0, +1, +2, +3, +4, +5, +6, +7 or +8 as far as the theory of oxidation number allows the oxidation number of the certain metal or semi-metal M to accept the specific value;
- the substituents R are
   i) independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, NR'₂, NHR', NR'R", N-pyrrolidino, N-piperidino, N-morpholino, N-tetraalkylguanidino (-N=C(NR₂)₂), N-phosphazenyl (-N=P(NR₂)₃), or
   ii) two substituents R chemically bound to the same P form a chelate ring with each other derived from secondary 1,2- and 1,3-diamines such as derivatives of N,N'-dialkyl-1,2-ethanediamine, N,N'-dialkyl-1,3-propanediamine, N,N'-dialkyl-1,2-cyclohexanediamine, 1,4-butandiyl, 1,5-hexandiyl,
   whereat the substituents R' are independently from each other chosen from the list comprising
   the substituents H, methyl, ethyl, propyl, n-alkyl, iso-alkyl, sec-alkyl, tert-alkyl, cycloalkyl, phenyl, benzyl, aryl, heteroaryl, allyl , OR, NR₂, pyrrolidino, piperidino, morpholino;
   and the substituents R" are independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, OR, NR₂, pyrrolidino, piperidino, morpholino;
- the ligands L are independently from each other chosen from the list comprising NO, CO, PR''''₃, NR''''₃, R''''NH₂, NH₃, H₂O, R''''OH, R''''OR'''', alkene, alkyne, arene, carbenes such as CHPh or N-heterocyclic carbenes (NHC), whereat substituents R'''' are independently chosen from the list comprising the substituents methyl, ethyl, propyl, n-alkyl, iso-alkyl, sec-alkyl, tert-alkyl, cycloalkyl, phenyl, benzyl, aryl.;
- the ligands X are independently from each other chosen from the list of formally anionic ligands comprising H, F, Cl, Br, I, OH, OR, NR₂, CN, CH₃, C₂H₅, substituted or unsubstituted alkyl ligands, H, C₆H₅, substituted or unsubstituted aryl ligands, C₅H₅, substituted or unsubstituted cyclopentadienyl ligands, C₃H₅, substituted or unsubstituted allyl ligands, C₂H₃, substituted or unsubstituted vinyl ligands, CCMe, substituted or unsubstituted 1-alkinyl ligands, COMe, substituted or unsubstituted acyl ligands, SiR₃, substituted or unsubstituted silyl ligands, formally dianionic ligands O (oxo), NR (organoimido), CHR, CR₂ (alkylidene), O₂ (peroxo), formally trianionic: N (nitrido), CR (alkylidyne);
- the indexes a, b and c have independently from each other values ranging from 1 through p, whereat p is a positive integer numeral;
- index m is an integer numeral having a value of 0, 1, 2, 3, 4, 5 or 6 and index n is an integer numeral having a value of 0, 1, 2, 3, 4, 5 or 6 whereat the sum of indexes m and n is maximum 8;
- index o is an integer numeral having a value of 1 or 2.

The invention further comprises a Metal complex or semi-metal complex according to formula **Ib:**

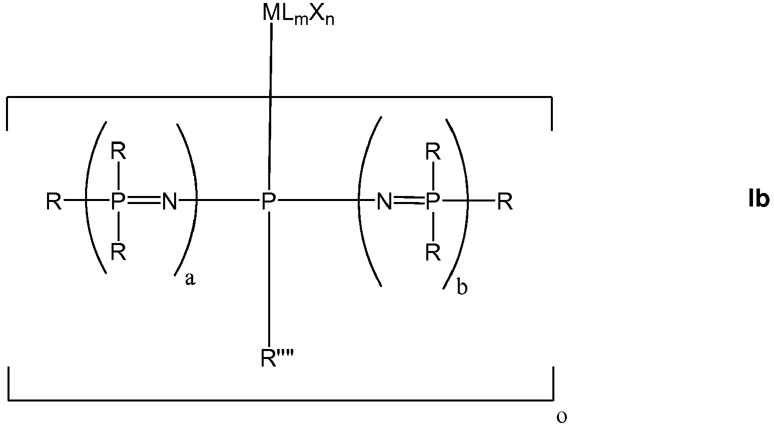

The Metal complex or semi-metal complex according to formula **Ib** is characterized in that
- the metal or semi-metal M is chosen from the list comprising the metals resp. semi-metals
   Fe, Co, Ni, Ru, Rh, Pd, Os, Ir, Pt, Sc, Y, La, Ti, Zr, Hf, V, Nb, Ta, Cr, Mo, W, Mn, Re, Cu, Ag, Au, Zn, Cd, Hg, Al, Ga, In, TI, Si, Ge, Sn, Pb, As, Sb, Bi, Se, Te, Ce, Pr, Nd, Pm, Sm, Eu, Gd, Tb, Dy, Ho, Er, Tm, Yb, Lu,
   whereat the oxidation number of metal or semi-metal M may be 0, +1, +2, +3, +4, +5, +6, +7 or +8 as far as the theory of oxidation number allows the oxidation number of the certain metal or semi-metal M to accept the specific value;
- the substituents R are
   i) independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, NR'₂, NHR', NR'R", N-pyrrolidino, N-piperidino, N-morpholino, N-tetraalkylguanidino (-N=C(NR₂)₂), N-phosphazenyl (-N=P(NR₂)₃), or
   ii) two substituents R chemically bound to the same P form a chelate ring with each other derived from secondary 1,2- and 1,3-diamines such as derivatives of N,N'-dialkyl-1,2-ethanediamine, N,N'-dialkyl-1,3-propanediamine, N,N'-dialkyl-1,2-cyclohexanediamine, 1,4-butandiyl, 1,5-hexandiyl,
   whereat the substituents R' are independently from each other chosen from the list comprising
   the substituents H, methyl, ethyl, propyl, n-alkyl, iso-alkyl, sec-alkyl, tert-alkyl, cycloalkyl, phenyl, benzyl, aryl, heteroaryl, allyl , OR, NR₂, pyrrolidino, piperidino, morpholino;
   and the substituents R" are independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, OR, NR₂, pyrrolidino, piperidino, morpholino;
- the ligands L are independently from each other chosen from the list comprising NO, CO, PR''''₃, NR''''₃, R''''NH₂, NH₃, H₂O, R''''OH, R''''OR'''', alkene, alkyne, arene, carbenes such as CHPh or N-heterocyclic carbenes (NHC), whereat substituents R'''' are independently chosen from the list comprising the substituents methyl, ethyl, propyl, n-alkyl, iso-alkyl, sec-alkyl, tert-alkyl, cycloalkyl, phenyl, benzyl, aryl.;
- the ligands X are independently from each other chosen from the list of formally anionic ligands comprising H, F, Cl, Br, I, OH, OR, NR₂, CN, CH₃, C₂H₅, substituted or unsubstituted alkyl ligands, H, C₆H₅, substituted or unsubstituted aryl ligands, C₅H₅, substituted or unsubstituted cyclopentadienyl ligands, C₃H₅, substituted or unsubstituted allyl ligands, C₂H₃, substituted or unsubstituted vinyl ligands, CCMe, substituted or unsubstituted 1-alkinyl ligands, COMe, substituted or unsubstituted acyl ligands, SiR₃, substituted or unsubstituted silyl ligands, formally dianionic ligands O (oxo), NR (organoimido), CHR, CR₂ (alkylidene), O₂ (peroxo), formally trianionic: N (nitrido), CR (alkylidyne);
- the indexes a and b have independently from each other values ranging from 1 through p, whereat p is a positive integer numeral;
- index m is an integer numeral having a value of 0, 1, 2, 3, 4, 5 or 6 and index n is an integer numeral having a value of 0, 1, 2, 3, 4, 5 or 6 whereat the sum of indexes m and n is maximum 8;
- index o is an integer numeral having a value of 1 or 2;
- R'''' is chosen from the list comprising the substituents methyl, ethyl, propyl, n-alkyl, iso-alkyl, sec-alkyl, tert-alkyl,
   cycloalkyl, phenyl, benzyl, aryl.

The invention further comprises a Metal complex or semi-metal complex according to formula **Ic**:

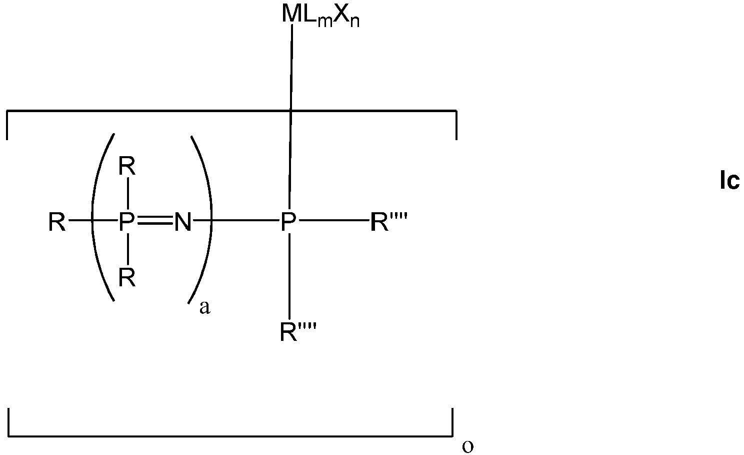

The Metal complex or semi-metal complex according to formula **Ic** is characterized in that
- the metal or semi-metal M is chosen from the list comprising the metals resp. semi-metals
   Fe, Co, Ni, Ru, Rh, Pd, Os, Ir, Pt, Sc, Y, La, Ti, Zr, Hf, V, Nb, Ta, Cr, Mo, W, Mn, Re, Cu, Ag, Au, Zn, Cd, Hg, Al, Ga, In, TI, Si, Ge, Sn, Pb, As, Sb, Bi, Se, Te, Ce, Pr, Nd, Pm, Sm, Eu, Gd, Tb, Dy, Ho, Er, Tm, Yb, Lu,
   whereat the oxidation number of metal or semi-metal M may be 0, +1, +2, +3, +4, +5, +6, +7 or +8 as far as the theory of oxidation number allows the oxidation number of the certain metal or semi-metal M
   to accept the specific value;
- the substituents R are
   i) independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, NR'₂, NHR', NR'R", N-pyrrolidino, N-piperidino, N-morpholino, N-tetraalkylguanidino (-N=C(NR₂)₂), N-phosphazenyl (-N=P(NR₂)₃),
      or
   ii) two substituents R chemically bound to the same P form a chelate ring with each other derived from secondary 1,2- and 1,3-diamines such as derivatives of N,N'-dialkyl-1,2-ethanediamine, N,N'-dialkyl-1,3-propanediamine, N,N'-dialkyl-1,2-cyclohexanediamine, 1,4-butandiyl, 1,5-hexandiyl,
   whereat the substituents R' are independently from each other chosen from the list comprising
   the substituents H, methyl, ethyl, propyl, n-alkyl, iso-alkyl, sec-alkyl, tert-alkyl, cycloalkyl, phenyl, benzyl, aryl, heteroaryl, allyl , OR, NR₂, pyrrolidino, piperidino, morpholino;
   and the substituents R" are independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, OR, NR₂, pyrrolidino, piperidino, morpholino;
- the ligands L are independently from each other chosen from the list comprising NO, CO, PR''''₃, NR''''₃, R''''NH₂, NH₃, H₂O, R''''OH, R''''OR'''', alkene, alkyne, arene, carbenes such as CHPh or N-heterocyclic carbenes (NHC), whereat substituents R'''' are independently chosen from the list comprising the substituents methyl, ethyl, propyl, n-alkyl, iso-alkyl, sec-alkyl, tert-alkyl,
   cycloalkyl, phenyl, benzyl, aryl.;
- the ligands X are independently from each other chosen from the list of formally anionic ligands comprising H, F, Cl, Br, I, OH, OR, NR₂, CN, CH₃, C₂H₅, substituted or unsubstituted alkyl ligands, H, C₆H₅, substituted or unsubstituted aryl ligands, C₅H₅, substituted or unsubstituted cyclopentadienyl ligands, C₃H₅, substituted or unsubstituted allyl ligands, C₂H₃, substituted or unsubstituted vinyl ligands, CCMe, substituted or unsubstituted 1-alkinyl ligands, COMe, substituted or unsubstituted acyl ligands, SiR₃, substituted or unsubstituted silyl ligands, formally dianionic ligands O (oxo), NR (organoimido), CHR, CR₂ (alkylidene),
   O₂ (peroxo), formally trianionic: N (nitrido), CR (alkylidyne);
- index a has a value ranging
   from 1 through p, whereat p is a positive integer numeral;
- index m is an integer numeral having a value of 0, 1, 2, 3, 4, 5 or 6 and index n is an integer numeral having a value of 0, 1, 2, 3, 4, 5 or 6 whereat the sum of indexes m and n is maximum 8;
- index o is an integer numeral having a value of 1 or 2;
- substituents R'''' are independently from each other chosen from the list comprising the substituents methyl, ethyl, propyl, n-alkyl, iso-alkyl, sec-alkyl, tert-alkyl,
   cycloalkyl, phenyl, benzyl, aryl.

The invention further comprises a Process for manufacturing of a compound as previously described (formula **Ia**), characterized in that the process comprises the following steps:
a) reacting an electrophile R'''₂PX with built-in auxiliary base and phosphazene according to formula **II**, 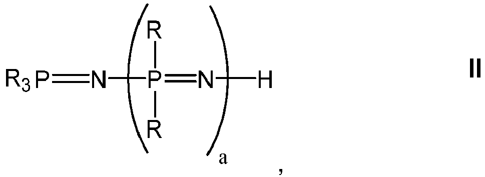 in an aprotic organic solvent,
   whereat the substituents R are
   i) independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, NR'₂, NHR', NR'R", N-pyrrolidino, N-piperidino, N-morpholino, N-tetraalkylguanidino (-N=C(NR₂)₂), N-phosphazenyl (-N=P(NR₂)₃),
      or
   ii) two substituents R chemically bound to the same P form a chelate ring with each other derived from secondary 1,2- and 1,3-diamines such as derivatives of N,N'-dialkyl-1,2-ethanediamine (-RN-CH₂CH₂-NR-), N,N'-dialkyl-1,3-propanediamine (-RN-CH₂CH₂-CH₂-NR-), or N,N'-dialkyl-1,2-cyclohexanediamine, 1,4-butandiyl, 1,5-hexandiyl,
   whereat the substituents R' are independently from each other chosen from the list comprising
   the substituents H, methyl, ethyl, propyl, n-alkyl, iso-alkyl, sec-alkyl, tert-alkyl, cycloalkyl, phenyl, benzyl, aryl, heteroaryl, allyl , OR, NR₂, pyrrolidino, piperidino;
   and the substituents R" are independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, OR, NR₂, pyrrolidino, piperidino;
   and X is chosen from the list comprising Cl, Br, I;
   and R''' is NMe₂ or NEt₂ or pyrrolidyl or a combination of two of them;
   index a has a value ranging from 1 through p, whereat p is a positive integer numeral;
   whereat the intermediate-product of this step is obtained as a
   hydrohalogenide salt;
b) precipitating of the salt of the intermediate-product of step a) with a weakly coordinating anion chosen from the list comprising the weakly coordinating anions (WCA)
   tetrafluoridoborate, tetraphenylborate,
   hexafluorophosphate, hexafluoroantimonate, hexafluoroarsenate, triflate, bistryiflylimide by dissolving the intermediate product hydrohalogenide salt of
   step a) in a minimum amount of water, thus creating a saturated or nearly saturated aqueous solution, adding a saturated or nearly saturated solution of the respective sodium salt of the weakly coordinating anion under stirring,
   separating the precipitated salt of the intermediate-product of step a) with the weakly coordinating anion
   being formed, rinsing it and drying it;
c) deprotonating of the salt with the weakly coordinating anion from step b) by reacting it with
   a metal amide within an organic solvent to the P(III) Bronsted or Lewis superbase, obtaining a suspension containing the P(III) Bronsted or Lewis superbase;
d) separating the suspension from step c) into the organic solution of the P(III) Bronsted or Lewis superbase and the residue;
e) reacting the P(III) Bronsted or Lewis superbase solution from step d) or the suspension containing the P(III) Bronsted or Lewis superbase from step c) with a metal or semi-metal complex of formula MLₘXₙ whereat
   - the metal or semi-metal M is chosen from the list comprising the metals resp. semi-metals
      Fe, Co, Ni, Ru, Rh, Pd, Os, Ir, Pt, Sc, Y, La, Ti, Zr, Hf, V, Nb, Ta, Cr, Mo, W, Mn, Re, Cu, Ag, Au, Zn, Cd, Hg, Al, Ga, In, TI, Si, Ge, Sn, Pb, As, Sb, Bi, Te, Ce, Pr, Nd, Pm, Sm, Eu, Gd, Tb, Dy, Ho, Er, Tm, Yb, Lu, whereat the oxidation number of metal or semi-metal M may be 0, +1, +2, +3, +4, +5, +6, +7 or +8 as far as the theory of oxidation number allows the oxidation number of the certain metal or semi-metal M to accept the specific value;
   - the ligands L are independently from each other chosen from the list comprising NO, CO, PR''''₃, NR''''₃, R''''NH₂, NH₃, H₂O, R''''OH, R''''OR'''', alkene, alkyne, arene, carbenes such as CHPh or N-heterocyclic carbenes (NHC), whereat substituents R'''' are independently chosen from the list comprising the substituents methyl, ethyl, propyl,
      n-alkyl, iso-alkyl, sec-alkyl, tert-alkyl,
      cycloalkyl, phenyl, benzyl, aryl;
   - the ligands X are independently from each other chosen from the list of formally anionic ligands comprising H, F, Cl, Br, I, OH, OR, NR₂, CN, CH₃, C₂H₅, substituted or unsubstituted alkyl ligands, H, C₆H₅, substituted or unsubstituted aryl ligands, C₅H₅, substituted or unsubstituted cyclopentadienyl ligands, C₃H₅, substituted or unsubstituted allyl ligands, C₂H₃, substituted or unsubstituted vinyl ligands, CCMe, substituted or unsubstituted 1-alkinyl ligands, COMe, substituted or unsubstituted acyl ligands, SiR₃, substituted or unsubstituted silyl ligands, formally dianionic ligands O (oxo), NR (organoimido), CHR, CR₂ (alkylidene), O₂ (peroxo), formally trianionic: N (nitrido), CR (alkylidyne);
   - index m is an integer numeral having a value of 0, 1, 2, 3, 4, 5 or 6 and index n is an integer numeral having a value of 0, 1, 2, 3, 4, 5 or 6 whereat the sum of indexes m and n is maximum 8;
   whereat a product mixture is obtained;
f) processing the product mixture from step e) to obtain the final product by
   - removing all volatiles, either directly or after separating the product mixture into residue and product solution,
      so that a raw product is obtained,
   - dissolving the raw product in a non-polar organic solvent,
   - clearing the obtained solution via filtration, centrifugation or sedimentation and
   - evaporating the solvent to dryness.

The invention further comprises a Process for manufacturing of a compound as previously described (formula **Ib**), characterized in that the process comprises the following steps:
a) reacting an electrophile R'''R''''PX with built-in auxiliary base and phosphazene according to formula **II**, 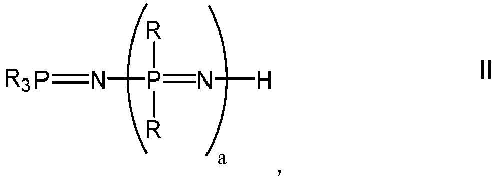 in an aprotic organic solvent,
   whereat the substituents R are
   i) independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, NR'₂, NHR', NR'R", N-pyrrolidino, N-piperidino, N-morpholino, N-tetraalkylguanidino (-N=C(NR₂)₂), N-phosphazenyl (-N=P(NR₂)₃),
      or
   ii) two substituents R chemically bound to the same P form a chelate ring with each other derived from secondary 1,2- and 1,3-diamines such as derivatives of N,N'-dialkyl-1,2-ethanediamine (-RN-CH₂CH₂-NR-), N,N'-dialkyl-1,3-propanediamine (-RN-CH₂CH₂-CH₂-NR-), or N,N'-dialkyl-1,2-cyclohexanediamine, 1,4-butandiyl, 1,5-hexandiyl,
   whereat the substituents R' are independently from each other chosen from the list comprising
   the substituents H, methyl, ethyl, propyl, n-alkyl, iso-alkyl, sec-alkyl, tert-alkyl, cycloalkyl, phenyl, benzyl, aryl, heteroaryl, allyl , OR, NR₂, pyrrolidino, piperidino;
   and the substituents R" are independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, OR, NR₂, pyrrolidino, piperidino;
   and X is chosen from the list comprising Cl, Br, I;
   and R''' is NMe₂ or NEt₂ or pyrrolidyl or a combination of two of them;
   and R'''' is methyl, ethyl, propyl, n-alkyl, iso-alkyl, sec-alkyl, tert-alkyl, cycloalkyl, phenyl, benzyl, aryl;
   index a has a value ranging from 1 through p, whereat p is a positive integer numeral;
   whereat the intermediate-product of this step is obtained as a hydrohalogenide salt;
b) precipitating of the salt of the intermediate-product of step a) with a weakly coordinating anion chosen from the list comprising the weakly coordinatin anions
   tetrafluoridoborate, tetraphenylborate,
   hexafluorophosphate, hexafluoroantimonate, hexafluoroarsenate, triflate, bistryiflylimide by dissolving the intermediate product hydrohalogenide salt of
   step a) in a minimum amount of water, thus creating a saturated or nearly saturated aqueous solution, adding a saturated or nearly saturated solution of the respective sodium salt of the weakly coordinating anion under stirring,
   separating the precipitated salt of the intermediate-product of step a) with the weakly coordinating anion
   being formed, rinsing it and drying it;
c) deprotonating of the salt with the weakly coordinating anion from
   step b) by reacting it with
   a metal amide within an organic solvent to the P(III) Bronsted or Lewis superbase, obtaining a suspension containing the P(III) Bronsted or Lewis superbase;
d) separating the suspension from step c) into the organic solution of the P(III) Bronsted or Lewis superbase and the residue;
e) reacting the P(III) Bronsted or Lewis superbase solution from step d) or the suspension containing the P(III) Bronsted or Lewis superbase from step c) with a metal or semi-metal complex of formula MLₘXₙ whereat
   - the metal or semi-metal M is chosen from the list comprising the metals resp. semi-metals
      Fe, Co, Ni, Ru, Rh, Pd, Os, Ir, Pt, Sc, Y, La, Ti, Zr, Hf, V, Nb, Ta, Cr, Mo, W, Mn, Re, Cu, Ag, Au, Zn, Cd, Hg, Al, Ga, In, TI, Si, Ge, Sn, Pb, As, Sb, Bi, Te, Ce, Pr, Nd, Pm, Sm, Eu, Gd, Tb, Dy, Ho, Er, Tm, Yb, Lu, whereat the oxidation number of metal or semi-metal M may be 0, +1, +2, +3, +4, +5, +6, +7 or +8 as far as the theory of oxidation number allows the oxidation number of the certain metal or semi-metal M to accept the specific value;
   - the ligands L are independently from each other chosen from the list comprising NO, CO, PR''''₃, NR''''₃, R''''NH₂, NH₃, H₂O, R''''OH, R''''OR'''', alkene, alkyne, arene, carbenes such as CHPh or N-heterocyclic carbenes (NHC), whereat substituents R'''' are independently chosen from the list comprising the substituents methyl, ethyl, propyl,
      n-alkyl, iso-alkyl, sec-alkyl, tert-alkyl,
      cycloalkyl, phenyl, benzyl, aryl;
   - the ligands X are independently from each other chosen from the list of formally anionic ligands comprising H, F, Cl, Br, I, OH, OR, NR₂, CN, CH₃, C₂H₅, substituted or unsubstituted alkyl ligands, H, C₆H₅, substituted or unsubstituted aryl ligands, C₅H₅, substituted or unsubstituted cyclopentadienyl ligands, C₃H₅, substituted or unsubstituted allyl ligands, C₂H₃, substituted or unsubstituted vinyl ligands, CCMe, substituted or unsubstituted 1-alkinyl ligands, COMe, substituted or unsubstituted acyl ligands, SiR₃, substituted or unsubstituted silyl ligands, formally dianionic ligands O (oxo), NR (organoimido), CHR, CR₂ (alkylidene), O₂ (peroxo), formally trianionic: N (nitrido), CR (alkylidyne);
   - index m is an integer numeral having a value of 0, 1, 2, 3, 4, 5 or 6 and index n is an integer numeral having a value of 0, 1, 2, 3, 4, 5 or 6 whereat the sum of indexes m and n is maximum 8;
   whereat a product mixture is obtained;
f) processing the product mixture from step e) to obtain the final product by
   - removing all volatiles, either directly or after separating the product mixture into residue and product solution, so that a raw product is obtained,
   - dissolving the raw product in a non-polar organic solvent,
   - clearing the obtained solution via filtration, centrifugation or sedimentation and
   - evaporating the solvent to dryness.

The invention further comprises a Process for manufacturing of a compound as previously described (formula **Ic**), characterized in that the process comprises the following steps:
a) reacting an electrophile R''''₂PX or an electrophile R''''₂PR''' with built-in auxiliary base and phosphazene according to formula **II**, 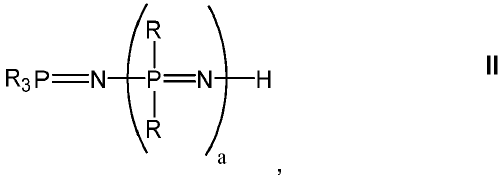 in an aprotic organic solvent,
   whereat the substituents R are
   i) independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, NR'₂, NHR', NR'R", N-pyrrolidino, N-piperidino, N-morpholino, N-tetraalkylguanidino (-N=C(NR₂)₂), N-phosphazenyl (-N=P(NR₂)₃),
      or
   ii) two substituents R chemically bound to the same P form a chelate ring with each other derived from secondary 1,2- and 1,3-diamines such as derivatives of N,N'-dialkyl-1,2-ethanediamine (-RN-CH₂CH₂-NR-), N,N'-dialkyl-1,3-propanediamine (-RN-CH₂CH₂-CH₂-NR-), or N,N'-dialkyl-1,2-cyclohexanediamine, 1,4-butandiyl, 1,5-hexandiyl,
   whereat the substituents R' are independently from each other chosen from the list comprising
   the substituents H, methyl, ethyl, propyl, n-alkyl, iso-alkyl, sec-alkyl, tert-alkyl, cycloalkyl, phenyl, benzyl, aryl, heteroaryl, allyl , OR, NR₂, pyrrolidino, piperidino;
   and the substituents R" are independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, OR, NR₂, pyrrolidino, piperidino;
   and X is chosen from the list comprising Cl, Br, I;
   and R''' is NMe₂ or NEt₂ or pyrrolidyl or a combination of two of them;
   and substituents R'''' are independently from each other methyl, ethyl, propyl, n-alkyl, iso-alkyl, sec-alkyl, tert-alkyl, cycloalkyl, phenyl, benzyl, aryl;
   index a has a value ranging from 1 through p, whereat p is a positive integer numeral;
   whereat the intermediate-product of this step is obtained as a hydrohalogenide salt;
b) precipitating of the salt of the intermediate-product of step a) with a weakly coordinating anion chosen from the list comprising the weakly coordinatin anions
   tetrafluoridoborate, tetraphenylborate,
   hexafluorophosphate, hexafluoroantimonate, hexafluoroarsenate, triflate, bistryiflylimide by dissolving the intermediate product hydrohalogenide salt of
   step a) in a minimum amount of water, thus creating a saturated or nearly saturated aqueous solution, adding a saturated or nearly saturated solution of the respective sodium salt of the weakly coordinating anion under stirring,
   separating the precipitated salt of the intermediate-product of step a) with the weakly coordinating anion
   being formed, rinsing it and drying it;
c) deprotonating of the salt with the weakly coordinating anion from
   step b) by reacting it with
   a metal amide within an organic solvent to the P(III) Bronsted or Lewis superbase, obtaining a suspension containing the P(III) Bronsted or Lewis superbase;
d) separating the suspension from step c) into the organic solution of the P(III) Bronsted or Lewis superbase and the residue;
e) reacting the P(III) Brønsted or Lewis superbase solution from step d) or the suspension containing the P(III) Bronsted or Lewis superbase from step c) with a metal or semi-metal complex of formula MLₘXₙ whereat
   - the metal or semi-metal M is chosen from the list comprising the metals resp. semi-metals
      Fe, Co, Ni, Ru, Rh, Pd, Os, Ir, Pt, Sc, Y, La, Ti, Zr, Hf, V, Nb, Ta, Cr, Mo, W, Mn, Re, Cu, Ag, Au, Zn, Cd, Hg, Al, Ga, In, TI, Si, Ge, Sn, Pb, As, Sb, Bi, Te, Ce, Pr, Nd, Pm, Sm, Eu, Gd, Tb, Dy, Ho, Er, Tm, Yb, Lu, whereat the oxidation number of metal or semi-metal M may be 0, +1, +2, +3, +4, +5, +6, +7 or +8 as far as the theory of oxidation number allows the oxidation number of the certain metal or semi-metal M to accept the specific value;
   - the ligands L are independently from each other chosen from the list comprising NO, CO, PR''''₃, NR''''₃, R''''NH₂, NH₃, H₂O, R''''OH, R''''OR'''', alkene, alkyne, arene, carbenes such as CHPh or N-heterocyclic carbenes (NHC), whereat substituents R'''' are independently chosen from the list comprising the substituents methyl, ethyl, propyl,
      n-alkyl, iso-alkyl, sec-alkyl, tert-alkyl,
      cycloalkyl, phenyl, benzyl, aryl;
   - the ligands X are independently from each other chosen from the list of formally anionic ligands comprising H, F, Cl, Br, I, OH, OR, NR₂, CN, CH₃, C₂H₅, substituted or unsubstituted alkyl ligands, H, C₆H₅, substituted or unsubstituted aryl ligands, C₅H₅, substituted or unsubstituted cyclopentadienyl ligands, C₃H₅, substituted or unsubstituted allyl ligands, C₂H₃, substituted or unsubstituted vinyl ligands, CCMe, substituted or unsubstituted 1-alkinyl ligands, COMe, substituted or unsubstituted acyl ligands,
      SiR₃, substituted or unsubstituted silyl ligands, formally dianionic ligands O (oxo), NR (organoimido), CHR, CR₂ (alkylidene), O₂ (peroxo), formally trianionic: N (nitrido), CR (alkylidyne);
   - index m is an integer numeral having a value of 0, 1, 2, 3, 4, 5 or 6 and index n is an integer numeral having a value of 0, 1, 2, 3, 4, 5 or 6 whereat the sum of indexes m and n is maximum 8;
   whereat a product mixture is obtained;
f) processing the product mixture from step e) to obtain the final product by
   - removing all volatiles, either directly or after separating the product mixture into residue and product solution,
      so that a raw product is obtained,
   - dissolving the raw product in a non-polar organic solvent,
   - clearing the obtained solution via filtration, centrifugation or sedimentation and
   - evaporating the solvent to dryness.

The invention further comprises the usage of a compound according to one of the previous descriptions (formula **Ia, Ib, Ic**) as catalyst for a chemical reaction.

The invention further comprises a Process for manufacturing of a compound according to formula **IIIa:**

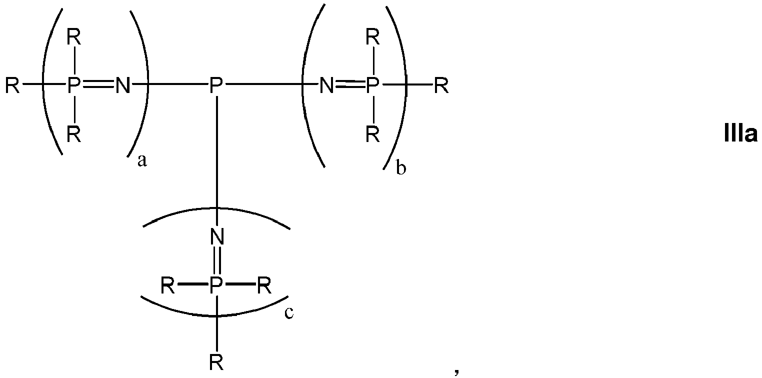

The Process for manufacturing of a compound according to formula **IIIa** is characterized in that the process comprises the following steps:
a) reacting an electrophile R'''₂PX with built-in auxiliary base and phosphazene according to formula **II**, 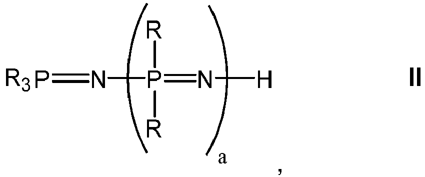 in an aprotic organic solvent,
   whereat the substituents R are
   i) independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, NR'₂, NHR', NR'R", N-pyrrolidino, N-piperidino, N-morpholino, N-tetraalkylguanidino (-N=C(NR₂)₂), N-phosphazenyl (-N=P(NR₂)₃),
      or
   ii) two substituents R chemically bound to the same P form a chelate ring with each other derived from secondary 1,2- and 1,3-diamines such as derivatives of N,N'-dialkyl-1,2-ethanediamine (-RN-CH₂CH₂-NR-), N,N'-dialkyl-1,3-propanediamine (-RN-CH₂CH₂-CH₂-NR-), or N,N'-dialkyl-1,2-cyclohexanediamine, 1,4-butandiyl, 1,5-hexandiyl,
   whereat the substituents R' are independently from each other chosen from the list comprising
   the substituents H, methyl, ethyl, propyl, n-alkyl, iso-alkyl, sec-alkyl, tert-alkyl, cycloalkyl, phenyl, benzyl, aryl, heteroaryl, allyl , OR, NR₂, pyrrolidino, piperidino;
   and the substituents R" are independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, OR, NR₂, pyrrolidino, piperidino;
   and X is chosen from the list comprising Cl, Br, I;
   and R''' is NMe₂ or NEt₂ or pyrrolidyl or a combination of two of them; index a has a value ranging from 1 through p, whereat p is a positive integer numeral;
   whereat the intermediate-product of this step is obtained as a hydrohalogenide salt;
b) precipitating of the salt of the intermediate-product of step a) with a weakly coordinating anion chosen from the list comprising the weakly coordinatin anions
   tetrafluoridoborate, tetraphenylborate,
   hexafluorophosphate, hexafluoroantimonate, hexafluoroarsenate, triflate, bistryiflylimide by dissolving the intermediate product hydrohalogenide salt of
   step a) in a minimum amount of water, thus creating a saturated or nearly saturated aqueous solution, adding a saturated or nearly saturated solution of the respective sodium salt of the weakly coordinating anion under stirring,
   separating the precipitated salt of the intermediate-product of step a) with the weakly coordinating anion
   being formed, rinsing it and drying it;
c) deprotonating of the salt with the weakly coordinating anion from step b) by reacting it with
   a metal amide within an organic solvent to the P(III) Bronsted or Lewis superbase, obtaining a suspension containing the P(III) Bronsted or Lewis superbase;
d) separating the suspension from step c) into the organic solution of the P(III) Brønsted or Lewis superbase and the residue;
e) processing the organic solution of the P(III) Bronsted or Lewis superbase from step d) to obtain the final product by
   - removing all volatiles,
      so that a raw product is obtained,
   - dissolving the raw product in a non-polar organic solvent,
   - clearing the obtained solution via filtration, centrifugation or sedimentation and
   - evaporating the solvent to dryness.

The invention further comprises a Process for manufacturing of a compound according to formula **IIIb:**

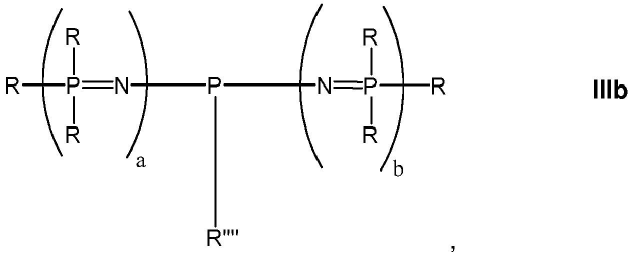

The Process for manufacturing of a compound according to formula **IIIb** is characterized in that the process comprises the following steps:
a) reacting an electrophile R'''R''''PX with built-in auxiliary base and phosphazene according to formula **II**, 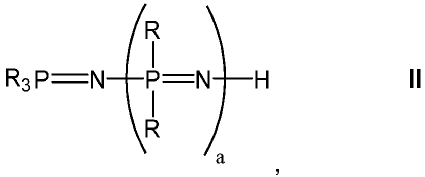 in an aprotic organic solvent,
   whereat the substituents R are
   i) independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, NR'₂, NHR', NR'R", N-pyrrolidino, N-piperidino, N-morpholino, N-tetraalkylguanidino (-N=C(NR₂)₂), N-phosphazenyl (-N=P(NR₂)₃),
      or
   ii) two substituents R chemically bound to the same P form a chelate ring with each other derived from secondary 1,2- and 1,3-diamines such as derivatives of N,N'-dialkyl-1,2-ethanediamine (-RN-CH₂CH₂-NR-), N,N'-dialkyl-1,3-propanediamine (-RN-CH₂CH₂-CH₂-NR-), or N,N'-dialkyl-1,2-cyclohexanediamine, 1,4-butandiyl, 1,5-hexandiyl,
   whereat the substituents R' are independently from each other chosen from the list comprising
   the substituents H, methyl, ethyl, propyl, n-alkyl, iso-alkyl, sec-alkyl, tert-alkyl, cycloalkyl, phenyl, benzyl, aryl, heteroaryl, allyl , OR, NR₂, pyrrolidino, piperidino;
   and the substituents R" are independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, OR, NR₂, pyrrolidino, piperidino;
   and X is chosen from the list comprising Cl, Br, I;
   and R''' is NMe₂ or NEt₂ or pyrrolidyl or a combination of two of them;
   and R'''' is methyl, ethyl, propyl, n-alkyl, iso-alkyl, sec-alkyl, tert-alkyl, cycloalkyl, phenyl, benzyl, aryl;
   index a has a value ranging from 1 through p, whereat p is a positive integer numeral;
   whereat the intermediate-product of this step is obtained as a
   hydrohalogenide salt;
b) precipitating of the salt of the intermediate-product of step a) with a weakly coordinating anion chosen from the list comprising the weakly coordinatin anions
   tetrafluoridoborate, tetraphenylborate,
   hexafluorophosphate, hexafluoroantimonate, hexafluoroarsenate, triflate, bistryiflylimide by dissolving the intermediate product hydrohalogenide salt of
   step a) in a minimum amount of water, thus creating a saturated or nearly saturated aqueous solution, adding a saturated or nearly saturated solution of the respective sodium salt of the weakly coordinating anion under stirring,
   separating the precipitated salt of the intermediate-product of step a) with the weakly coordinating anion
   being formed, rinsing it and drying it;
c) deprotonating of the salt with the weakly coordinating anion from step b) by reacting it with
   a metal amide within an organic solvent to the P(III) Bronsted or Lewis superbase, obtaining a suspension containing the P(III) Bronsted or Lewis superbase;
d) separating the suspension from step c) into the organic solution of the P(III) Bronsted or Lewis superbase and the residue;
e) processing the organic solution of the P(III) Bronsted or Lewis superbase from step d) to obtain the final product by
   - removing all volatiles,
      so that a raw product is obtained,
   - dissolving the raw product in a non-polar organic solvent,
   - clearing the obtained solution via filtration, centrifugation or
      sedimentation and
   - evaporating the solvent to dryness.

The invention further comprises a Process for manufacturing of a compound according to formula **IIIc:**

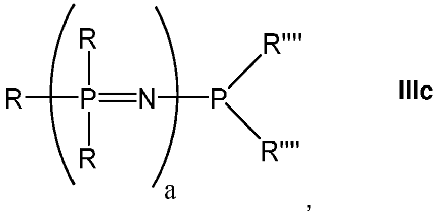

The Process for manufacturing of a compound according to formula **IIIc** is characterized in that the process comprises the following steps:
a) reacting an electrophile R''''₂PX or an electrophile R''''₂PR''' with built-in auxiliary base and phosphazene according to formula **II**, 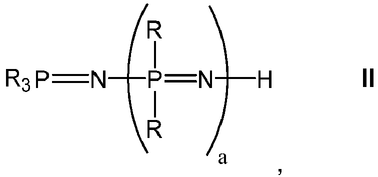 in an aprotic organic solvent,
   whereat the substituents R are
   i) independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, NR'₂, NHR', NR'R", N-pyrrolidino, N-piperidino, N-morpholino, N-tetraalkylguanidino (-N=C(NR₂)₂), N-phosphazenyl (-N=P(NR₂)₃),
      or
   ii) two substituents R chemically bound to the same P form a chelate ring with each other derived from secondary 1,2- and 1,3-diamines such as derivatives of N,N'-dialkyl-1,2-ethanediamine (-RN-CH₂CH₂-NR-), N,N'-dialkyl-1,3-propanediamine (-RN-CH₂CH₂-CH₂-NR-), or N,N'-dialkyl-1,2-cyclohexanediamine, 1,4-butandiyl, 1,5-hexandiyl,
   whereat the substituents R' are independently from each other chosen from the list comprising
   the substituents H, methyl, ethyl, propyl, n-alkyl, iso-alkyl, sec-alkyl, tert-alkyl, cycloalkyl, phenyl, benzyl, aryl, heteroaryl, allyl , OR, NR₂, pyrrolidino, piperidino;
   and the substituents R" are independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, OR, NR₂, pyrrolidino, piperidino;
   and X is chosen from the list comprising Cl, Br, I;
   and R''' is NMe₂ or NEt₂ or pyrrolidyl or a combination of two of them;
   and substituents R'''' are independently from each other methyl, ethyl, propyl, n-alkyl, iso-alkyl, sec-alkyl, tert-alkyl, cycloalkyl, phenyl, benzyl, aryl;
   index a has a value ranging from 1 through p, whereat p is a positive integer numeral;
   whereat the intermediate-product of this step is obtained as a hydrohalogenide salt;
b) precipitating of the salt of the intermediate-product of step a) with a weakly coordinating anion chosen from the list comprising the weakly coordinatin anions
   tetrafluoridoborate, tetraphenylborate,
   hexafluorophosphate, hexafluoroantimonate, hexafluoroarsenate, triflate, bistryiflylimide by dissolving the intermediate product hydrohalogenide salt of
   step a) in a minimum amount of water, thus creating a saturated or nearly saturated aqueous solution, adding a saturated or nearly saturated solution of the respective sodium salt of the weakly coordinating anion under stirring,
   separating the precipitated salt of the intermediate-product of step a) with the weakly coordinating anion
   being formed, rinsing it and drying it;
c) deprotonating of the salt with the weakly coordinating anion from step b) by reacting it with
   a metal amide within an organic solvent to the P(III) Bronsted or Lewis superbase, obtaining a suspension containing the P(III) Bronsted or Lewis superbase;
d) separating the suspension from step c) into the organic solution of the P(III) Bronsted or Lewis superbase and the residue;
e) processing the organic solution of the P(III) Bronsted or Lewis superbase from step d) to obtain the final product by
   - removing all volatiles,
      so that a raw product is obtained,
   - dissolving the raw product in a non-polar organic solvent,
   - clearing the obtained solution via filtration, centrifugation or
      sedimentation and
   - evaporating the solvent to dryness.

As is obvious to the person skilled in the art, all of the above mentioned lists of substitutents and ligands as well as the lists of weakly coordination anions ("WCA") are not intended to confine the scope of the invention. They are given only by way of example. There are many more items of those lists conceivable by the person skilled in the art which are also encompassed by the scope of the invention.

## Claims

1. Metal complex or semi-metal complex according to formula la, 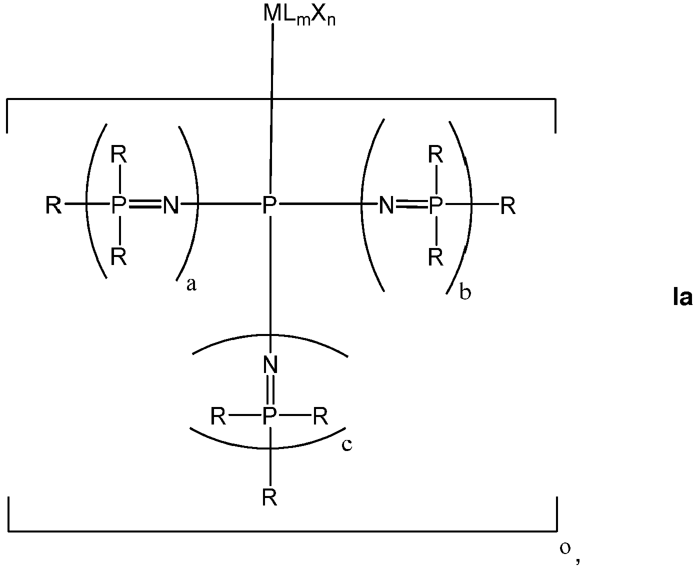 **characterized in that**
- the metal or semi-metal M is chosen from the list comprising the metals resp. semi-metals
Fe, Co, Ni, Ru, Rh, Pd, Os, Ir, Pt, Sc, Y, La, Ti, Zr, Hf, V, Nb, Ta, Cr, Mo, W, Mn, Re, Cu, Ag, Au, Zn, Cd, Hg, Al, Ga, In, TI, Si, Ge, Sn, Pb, As, Sb, Bi, Se, Te, Ce, Pr, Nd, Pm, Sm, Eu, Gd, Tb, Dy, Ho, Er, Tm, Yb, Lu, whereat the oxidation number of metal or semi-metal M may be 0, +1, +2, +3, +4, +5, +6, +7 or +8 as far as the theory of oxidation number allows the oxidation number of the certain metal or semi-metal M to accept the specific value;
- the substituents R are
i) independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, NR'₂, NHR', NR'R", N-pyrrolidino, N-piperidino, N-morpholino, N-tetraalkylguanidino (-N=C(NR₂)₂), N-phosphazenyl (-N=P(NR₂)₃),
or
ii) two substituents R chemically bound to the same P form a chelate ring with each other derived from secondary 1,2- and 1,3-diamines such as derivatives of N,N'-dialkyl-1,2-ethanediamine, N,N'-dialkyl-1,3-propanediamine, N,N'-dialkyl-1,2-cyclohexanediamine, 1,4-butandiyl, 1,5-hexandiyl,
whereat the substituents R' are independently from each other chosen from the list comprising
the substituents H, methyl, ethyl, propyl, n-alkyl, iso-alkyl, sec-alkyl, tert-alkyl, cycloalkyl, phenyl, benzyl, aryl, heteroaryl, allyl , OR, NR₂, pyrrolidino, piperidino, morpholino;
and the substituents R" are independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, OR, NR₂, pyrrolidino, piperidino, morpholino;
- the ligands L are independently from each other chosen from the list comprising NO, CO, PR''''₃, NR''''₃, R''''NH₂, NH₃, H₂O, R''''OH, R''''OR'''', alkene, alkyne, arene, carbenes such as CHPh or N-heterocyclic carbenes (NHC), whereat substituents R'''' are independently chosen from the list comprising the substituents methyl, ethyl, propyl,
n-alkyl, iso-alkyl, sec-alkyl, tert-alkyl,
cycloalkyl, phenyl, benzyl, aryl.;
- the ligands X are independently from each other chosen from the list of formally anionic ligands comprising H, F, Cl, Br, I, OH, OR, NR₂, CN, CH₃, C₂H₅, substituted or unsubstituted alkyl ligands, H, C₆H₅, substituted or unsubstituted aryl ligands, C₅H₅, substituted or unsubstituted cyclopentadienyl ligands, C₃H₅, substituted or unsubstituted allyl ligands, C₂H₃, substituted or unsubstituted vinyl ligands, CCMe, substituted or unsubstituted 1-alkinyl ligands, COMe, substituted or unsubstituted acyl ligands, SiR₃, substituted or unsubstituted silyl ligands, formally dianionic ligands O (oxo), NR (organoimido), CHR, CR₂ (alkylidene), O₂ (peroxo), formally trianionic: N (nitrido), CR (alkylidyne);
- the indexes a, b and c have independently from each other values ranging from 1 through p, whereat p is a positive integer numeral;
- index m is an integer numeral having a value of 0, 1, 2, 3, 4, 5 or 6 and index n is an integer numeral having a value of 0, 1, 2, 3, 4, 5 or 6 whereat the sum of indexes m and n is maximum 8;
- index o is an integer numeral having a value of 1 or 2.

2. Metal complex or semi-metal complex according to formula **Ib,** 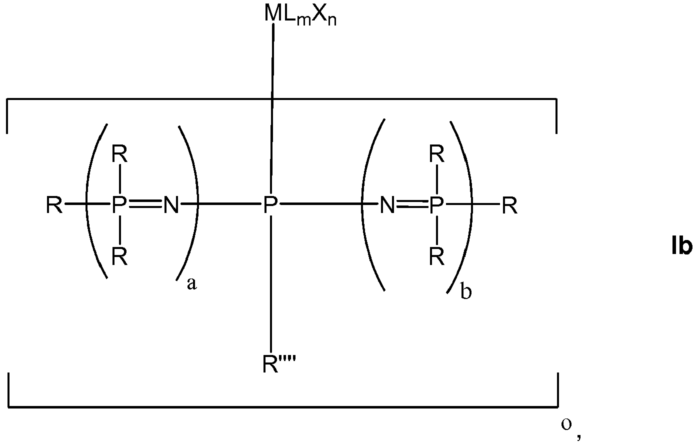 **characterized in that**
- the metal or semi-metal M is chosen from the list comprising the metals resp. semi-metals
Fe, Co, Ni, Ru, Rh, Pd, Os, Ir, Pt, Sc, Y, La, Ti, Zr, Hf, V, Nb, Ta, Cr, Mo, W, Mn, Re, Cu, Ag, Au, Zn, Cd, Hg, Al, Ga, In, TI, Si, Ge, Sn, Pb, As, Sb, Bi, Se, Te, Ce, Pr, Nd, Pm, Sm, Eu, Gd, Tb, Dy, Ho, Er, Tm, Yb, Lu, whereat the oxidation number of metal or semi-metal M may
be 0, +1, +2, +3, +4, +5, +6, +7 or +8 as far as the theory of oxidation number allows the oxidation number of the certain metal or semi-metal M to accept the specific value;
- the substituents R are
i) independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, NR'₂, NHR', NR'R", N-pyrrolidino, N-piperidino, N-morpholino, N-tetraalkylguanidino (-N=C(NR₂)₂), N-phosphazenyl (-N=P(NR₂)₃),
or
ii) two substituents R chemically bound to the same P form a chelate ring with each other derived from secondary 1,2- and 1,3-diamines such as derivatives of N,N'-dialkyl-1,2-ethanediamine, N,N'-dialkyl-1,3-propanediamine, N,N'-dialkyl-1,2-cyclohexanediamine, 1,4-butandiyl, 1,5-hexandiyl,
whereat the substituents R' are independently from each other chosen from the list comprising
the substituents H, methyl, ethyl, propyl, n-alkyl, iso-alkyl, sec-alkyl, tert-alkyl, cycloalkyl, phenyl, benzyl, aryl, heteroaryl, allyl , OR, NR₂, pyrrolidino, piperidino, morpholino;
and the substituents R" are independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, OR, NR₂, pyrrolidino, piperidino, morpholino;
- the ligands L are independently from each other chosen from the list comprising NO, CO, PR''''₃, NR''''₃, R''''NH₂, NH₃, H₂O, R''''OH, R''''OR'''', alkene, alkyne, arene, carbenes such as CHPh or N-heterocyclic carbenes (NHC), whereat substituents R'''' are independently chosen from the list comprising the substituents methyl, ethyl, propyl,
n-alkyl, iso-alkyl, sec-alkyl, tert-alkyl,
cycloalkyl, phenyl, benzyl, aryl.;
- the ligands X are independently from each other chosen from the list of formally anionic ligands comprising H, F, Cl, Br, I, OH, OR, NR₂, CN, CH₃, C₂H₅, substituted or unsubstituted alkyl ligands, H, C₆H₅, substituted or unsubstituted aryl ligands, C₅H₅, substituted or unsubstituted cyclopentadienyl ligands, C₃H₅, substituted or unsubstituted allyl ligands, C₂H₃, substituted or unsubstituted vinyl ligands, CCMe, substituted or unsubstituted 1-alkinyl ligands, COMe, substituted or unsubstituted acyl ligands, SiR₃, substituted or unsubstituted silyl ligands, formally dianionic ligands O (oxo), NR (organoimido), CHR, CR₂ (alkylidene), O₂ (peroxo), formally trianionic: N (nitrido), CR (alkylidyne);
- the indexes a and b have independently from each other values ranging from 1 through p, whereat p is a positive integer numeral;
- index m is an integer numeral having a value of 0, 1, 2, 3, 4, 5 or 6 and index n is an integer numeral having a value of 0, 1, 2, 3, 4, 5 or 6 whereat the sum of indexes m and n is maximum 8;
- index o is an integer numeral having a value of 1 or 2;
- R'''' is chosen from the list comprising the substituents methyl, ethyl, propyl, n-alkyl, iso-alkyl, sec-alkyl, tert-alkyl,
cycloalkyl, phenyl, benzyl, aryl.

3. Metal complex or semi-metal complex according to formula **Ic,** 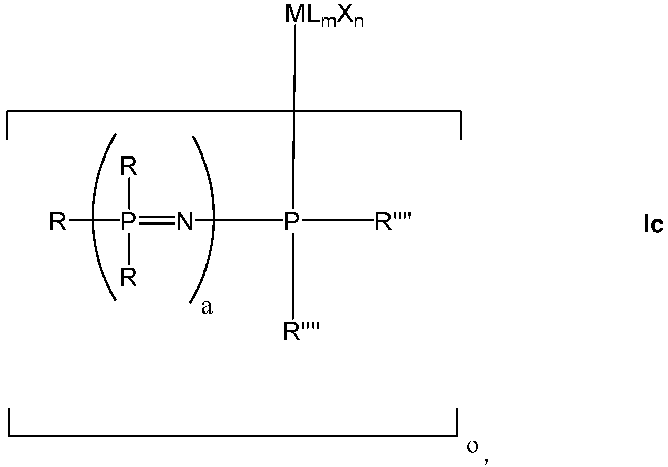 **characterized in that**
- the metal or semi-metal M is chosen from the list comprising the metals resp. semi-metals
Fe, Co, Ni, Ru, Rh, Pd, Os, Ir, Pt, Sc, Y, La, Ti, Zr, Hf, V, Nb, Ta, Cr, Mo, W, Mn, Re, Cu, Ag, Au, Zn, Cd, Hg, Al, Ga, In, TI, Si, Ge, Sn, Pb, As, Sb, Bi, Se, Te, Ce, Pr, Nd, Pm, Sm, Eu, Gd, Tb, Dy, Ho, Er, Tm, Yb, Lu, whereat the oxidation number of metal or semi-metal M may be 0, +1, +2, +3, +4, +5, +6, +7 or +8 as far as the theory of oxidation number allows the oxidation number of the certain metal or semi-metal M to accept the specific value;
- the substituents R are
i) independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, NR'₂, NHR', NR'R", N-pyrrolidino, N-piperidino, N-morpholino, N-tetraalkylguanidino (-N=C(NR₂)₂), N-phosphazenyl (-N=P(NR₂)₃),
or
ii) two substituents R chemically bound to the same P form a chelate ring with each other derived from secondary 1,2- and 1,3-diamines such as derivatives of N,N'-dialkyl-1,2-ethanediamine, N,N'-dialkyl-1,3-propanediamine, N,N'-dialkyl-1,2-cyclohexanediamine, 1,4-butandiyl, 1,5-hexandiyl,
whereat the substituents R' are independently from each other chosen from the list comprising
the substituents H, methyl, ethyl, propyl, n-alkyl, iso-alkyl, sec-alkyl, tert-alkyl, cycloalkyl, phenyl, benzyl, aryl, heteroaryl, allyl , OR, NR₂, pyrrolidino, piperidino, morpholino;
and the substituents R" are independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, OR, NR₂, pyrrolidino, piperidino, morpholino;
- the ligands L are independently from each other chosen from the list comprising NO, CO, PR''''₃, NR''''₃, R''''NH₂, NH₃, H₂O, R''''OH, R''''OR'''', alkene, alkyne, arene, carbenes such as CHPh or N-heterocyclic carbenes (NHC), whereat substituents R'''' are independently chosen from the list comprising the substituents methyl, ethyl, propyl,
n-alkyl, iso-alkyl, sec-alkyl, tert-alkyl,
cycloalkyl, phenyl, benzyl, aryl.;
- the ligands X are independently from each other chosen from the list of formally anionic ligands comprising H, F, Cl, Br, I, OH, OR, NR₂, CN, CH₃, C₂H₅, substituted or unsubstituted alkyl ligands, H, C₆H₅, substituted or unsubstituted aryl ligands, C₅H₅, substituted or unsubstituted cyclopentadienyl ligands, C₃H₅, substituted or unsubstituted allyl ligands, C₂H₃, substituted or unsubstituted vinyl ligands, CCMe, substituted or unsubstituted 1-alkinyl ligands, COMe, substituted or unsubstituted acyl ligands, SiR₃, substituted or unsubstituted silyl ligands, formally dianionic ligands O (oxo), NR (organoimido), CHR, CR₂ (alkylidene),
O₂ (peroxo), formally trianionic: N (nitrido), CR (alkylidyne);
- index a has a value ranging
from 1 through p, whereat p is a positive integer numeral;
- index m is an integer numeral having a value of 0, 1, 2, 3, 4, 5 or 6 and index n is an integer numeral having a value of 0, 1, 2, 3, 4, 5 or 6 whereat the sum of indexes m and n is maximum 8;
- index o is an integer numeral having a value of 1 or 2;
- substituents R'''' are independently from each other chosen from the list comprising the substituents methyl, ethyl, propyl, n-alkyl, iso-alkyl, sec-alkyl, tert-alkyl,
cycloalkyl, phenyl, benzyl, aryl.

4. Process for manufacturing of a compound according to claim 1, **characterized in that** the process comprises the following steps:
a) reacting an electrophile R'''₂PX with built-in auxiliary base and phosphazene according to formula **II**, 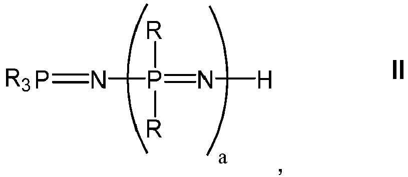 in an aprotic organic solvent,
whereat the substituents R are
i) independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, NR'₂, NHR', NR'R", N-pyrrolidino, N-piperidino, N-morpholino, N-tetraalkylguanidino (-N=C(NR₂)₂), N-phosphazenyl (-N=P(NR₂)₃),
or
ii) two substituents R chemically bound to the same P form a chelate ring with each other derived from secondary 1,2- and 1,3-diamines such as derivatives of N,N'-dialkyl-1,2-ethanediamine (-RN-CH₂CH₂-NR-), N,N'-dialkyl-1,3-propanediamine (-RN-CH₂CH₂-CH₂-NR-), or N,N'-dialkyl-1,2-cyclohexanediamine, 1,4-butandiyl, 1,5-hexandiyl,
whereat the substituents R' are independently from each other chosen from the list comprising
the substituents H, methyl, ethyl, propyl, n-alkyl, iso-alkyl, sec-alkyl, tert-alkyl, cycloalkyl, phenyl, benzyl, aryl, heteroaryl, allyl , OR, NR₂, pyrrolidino, piperidino;
and the substituents R" are independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, OR, NR₂, pyrrolidino, piperidino;
and X is chosen from the list comprising Cl, Br, I;
and R''' is NMe₂ or NEt₂ or pyrrolidyl or a combination of two of them; index a has a value ranging from 1 through p, whereat p is a positive integer numeral;
whereat the intermediate-product of this step is obtained as a hydrohalogenide salt;
b) precipitating of the salt of the intermediate-product of step a) with a weakly coordinating anion chosen from the list comprising the weakly coordinating anions
tetrafluoridoborate, tetraphenylborate,
hexafluorophosphate, hexafluoroantimonate, hexafluoroarsenate, triflate, bistryiflylimide by dissolving the intermediate product hydrohalogenide salt of
step a) in a minimum amount of water, thus creating a saturated or nearly saturated aqueous solution, adding a saturated or nearly saturated solution of the respective sodium salt of the weakly coordinating anion under stirring,
separating the precipitated salt of the intermediate-product of step a) with the weakly coordinating anion
being formed, rinsing it and drying it;
c) deprotonating of the salt with the weakly coordinating anion from step b) by reacting it with
a metal amide within an organic solvent to the P(III) Bronsted or Lewis superbase, obtaining a suspension containing the P(III) Bronsted or Lewis superbase;
d) separating the suspension from step c) into the organic solution of the P(III) Bronsted or Lewis superbase and the residue;
e) reacting the P(III) Brønsted or Lewis superbase solution from step d) or the suspension containing the P(III) Bronsted or Lewis superbase from step c) with a metal or semi-metal complex of formula MLₘXₙ whereat
- the metal or semi-metal M is chosen from the list comprising the metals resp. semi-metals
Fe, Co, Ni, Ru, Rh, Pd, Os, Ir, Pt, Sc, Y, La, Ti, Zr, Hf, V, Nb, Ta, Cr, Mo, W, Mn, Re, Cu, Ag, Au, Zn, Cd, Hg, Al, Ga, In, TI, Si, Ge, Sn, Pb, As, Sb, Bi, Te, Ce, Pr, Nd, Pm, Sm, Eu, Gd, Tb, Dy, Ho, Er, Tm, Yb, Lu, whereat the oxidation number of metal or semi-metal M may be 0, +1, +2, +3, +4, +5, +6, +7 or +8 as far as the theory of oxidation number allows the oxidation number of the certain metal or semi-metal M to accept the specific value;
- the ligands L are independently from each other chosen from the list comprising NO, CO, PR''''₃, NR''''₃, R''''NH₂, NH₃, H₂O, R''''OH, R''''OR'''', alkene, alkyne, arene, carbenes such as CHPh or N-heterocyclic carbenes (NHC), whereat substituents R'''' are independently chosen from the list comprising the substituents methyl, ethyl, propyl,
n-alkyl, iso-alkyl, sec-alkyl, tert-alkyl,
cycloalkyl, phenyl, benzyl, aryl;
- the ligands X are independently from each other chosen from the list of formally anionic ligands comprising H, F, Cl, Br, I, OH, OR, NR₂, CN, CH₃, C₂H₅, substituted or unsubstituted alkyl ligands, H, C₆H₅, substituted or unsubstituted aryl ligands, C₅H₅, substituted or unsubstituted cyclopentadienyl ligands, C₃H₅, substituted or unsubstituted allyl ligands, C₂H₃, substituted or unsubstituted vinyl ligands, CCMe, substituted or unsubstituted 1-alkinyl ligands, COMe, substituted or unsubstituted acyl ligands, SiR₃, substituted or unsubstituted silyl ligands, formally dianionic ligands O (oxo), NR (organoimido), CHR, CR₂ (alkylidene), O₂ (peroxo), formally trianionic: N (nitrido), CR (alkylidyne);
- index m is an integer numeral having a value of 0, 1, 2, 3, 4, 5 or 6 and index n is an integer numeral having a value of 0, 1, 2, 3, 4, 5 or 6 whereat the sum of indexes m and n is maximum 8;
whereat a product mixture is obtained;
f) processing the product mixture from step e) to obtain the final product by
- removing all volatiles, either directly or after separating the product mixture into residue and product solution,
so that a raw product is obtained,
- dissolving the raw product in a non-polar organic solvent,
- clearing the obtained solution via filtration, centrifugation or sedimentation and
- evaporating the solvent to dryness.

5. Process for manufacturing of a compound according to claim 2, **characterized in that** the process comprises the following steps:
a) reacting an electrophile R'''R''''PX with built-in auxiliary base and phosphazene according to formula **II**, 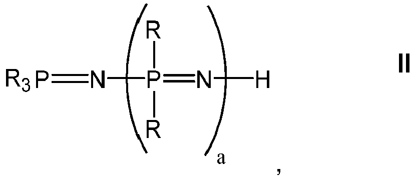 in an aprotic organic solvent,
whereat the substituents R are
i) independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, NR'₂, NHR', NR'R", N-pyrrolidino, N-piperidino, N-morpholino, N-tetraalkylguanidino (-N=C(NR₂)₂), N-phosphazenyl (-N=P(NR₂)₃),
or
ii) two substituents R chemically bound to the same P form a chelate ring with each other derived from secondary 1,2- and 1,3-diamines such as derivatives of N,N'-dialkyl-1,2-ethanediamine (-RN-CH₂CH₂-NR-), N,N'-dialkyl-1,3-propanediamine (-RN-CH₂CH₂-CH₂-NR-), or N,N'-dialkyl-1,2-cyclohexanediamine, 1,4-butandiyl, 1,5-hexandiyl,
whereat the substituents R' are independently from each other chosen from the list comprising
the substituents H, methyl, ethyl, propyl, n-alkyl, iso-alkyl, sec-alkyl, tert-alkyl, cycloalkyl, phenyl, benzyl, aryl, heteroaryl, allyl , OR, NR₂, pyrrolidino, piperidino;
and the substituents R" are independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, OR, NR₂, pyrrolidino, piperidino;
and X is chosen from the list comprising Cl, Br, I;
and R''' is NMe₂ or NEt₂ or pyrrolidyl or a combination of two of them; and R'''' is methyl, ethyl, propyl, n-alkyl, iso-alkyl, sec-alkyl, tert-alkyl, cycloalkyl, phenyl, benzyl, aryl;
index a has a value ranging from 1 through p, whereat p is a positive integer numeral;
whereat the intermediate-product of this step is obtained as a hydrohalogenide salt;
b) precipitating of the salt of the intermediate-product of step a) with a weakly coordinating anion chosen from the list comprising the weakly coordinatin anions
tetrafluoridoborate, tetraphenylborate,
hexafluorophosphate, hexafluoroantimonate, hexafluoroarsenate, triflate, bistryiflylimide by dissolving the intermediate product hydrohalogenide salt of
step a) in a minimum amount of water, thus creating a saturated or nearly saturated aqueous solution, adding a saturated or nearly saturated solution of the respective sodium salt of the weakly coordinating anion under stirring,
separating the precipitated salt of the intermediate-product of step a) with the weakly coordinating anion
being formed, rinsing it and drying it;
c) deprotonating of the salt with the weakly coordinating anion from step b) by reacting it with
a metal amide within an organic solvent to the P(III) Bronsted or Lewis superbase, obtaining a suspension containing the P(III) Bronsted or Lewis superbase;
d) separating the suspension from step c) into the organic solution of the P(III) Bronsted or Lewis superbase and the residue;
e) reacting the P(III) Bronsted or Lewis superbase solution from step d) or the suspension containing the P(III) Bronsted or Lewis superbase from step c) with a metal or semi-metal complex of formula MLₘXₙ whereat
- the metal or semi-metal M is chosen from the list comprising the metals resp. semi-metals
Fe, Co, Ni, Ru, Rh, Pd, Os, Ir, Pt, Sc, Y, La, Ti, Zr, Hf, V, Nb, Ta, Cr, Mo, W, Mn, Re, Cu, Ag, Au, Zn, Cd, Hg, Al, Ga, In, TI, Si, Ge, Sn, Pb, As, Sb, Bi, Te, Ce, Pr, Nd, Pm, Sm, Eu, Gd, Tb, Dy, Ho, Er, Tm, Yb, Lu, whereat the oxidation number of metal or semi-metal M may be 0, +1, +2, +3, +4, +5, +6, +7 or +8 as far as the theory of oxidation number allows the oxidation number of the certain metal or semi-metal M to accept the specific value;
- the ligands L are independently from each other chosen from the list comprising NO, CO, PR''''₃, NR''''₃, R''''NH₂, NH₃, H₂O, R''''OH, R''''OR'''', alkene, alkyne, arene, carbenes such as CHPh or N-heterocyclic carbenes (NHC), whereat substituents R'''' are independently chosen from the list comprising the substituents methyl, ethyl, propyl,
n-alkyl, iso-alkyl, sec-alkyl, tert-alkyl,
cycloalkyl, phenyl, benzyl, aryl;
- the ligands X are independently from each other chosen from the list of formally anionic ligands comprising H, F, Cl, Br, I, OH, OR, NR₂, CN, CH₃, C₂H₅, substituted or unsubstituted alkyl ligands, H, C₆H₅, substituted or unsubstituted aryl ligands, C₅H₅, substituted or unsubstituted cyclopentadienyl ligands, C₃H₅, substituted or unsubstituted allyl ligands, C₂H₃, substituted or unsubstituted vinyl ligands, CCMe, substituted or unsubstituted 1-alkinyl ligands, COMe, substituted or unsubstituted acyl ligands, SiR₃, substituted or unsubstituted silyl ligands, formally dianionic ligands O (oxo), NR (organoimido), CHR, CR₂ (alkylidene), O₂ (peroxo), formally trianionic: N (nitrido), CR (alkylidyne);
- index m is an integer numeral having a value of 0, 1, 2, 3, 4, 5 or 6 and index n is an integer numeral having a value of 0, 1, 2, 3, 4, 5 or 6 whereat the sum of indexes m and n is maximum 8;
whereat a product mixture is obtained;
f) processing the product mixture from step e) to obtain the final product by
- removing all volatiles, either directly or after separating the product mixture into residue and product solution,
so that a raw product is obtained,
- dissolving the raw product in a non-polar organic solvent,
- clearing the obtained solution via filtration, centrifugation or sedimentation and
- evaporating the solvent to dryness.

6. Process for manufacturing of a compound according to claim 3, **characterized in that** the process comprises the following steps:
a) reacting an electrophile R''''₂PX or an electrophile R''''₂PR''' with built-in auxiliary base and phosphazene according to formula **II**, 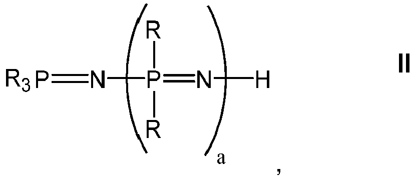 in an aprotic organic solvent,
whereat the substituents R are
i) independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, NR'₂, NHR', NR'R", N-pyrrolidino, N-piperidino, N-morpholino, N-tetraalkylguanidino (-N=C(NR₂)₂), N-phosphazenyl (-N=P(NR₂)₃),
or
ii) two substituents R chemically bound to the same P form a chelate ring with each other derived from secondary 1,2- and 1,3-diamines such as derivatives of N,N'-dialkyl-1,2-ethanediamine (-RN-CH₂CH₂-NR-), N,N'-dialkyl-1,3-propanediamine (-RN-CH₂CH₂-CH₂-NR-), or N,N'-dialkyl-1,2-cyclohexanediamine, 1,4-butandiyl, 1,5-hexandiyl,
whereat the substituents R' are independently from each other chosen from the list comprising
the substituents H, methyl, ethyl, propyl, n-alkyl, iso-alkyl, sec-alkyl, tert-alkyl, cycloalkyl, phenyl, benzyl, aryl, heteroaryl, allyl , OR, NR₂, pyrrolidino, piperidino;
and the substituents R" are independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, OR, NR₂, pyrrolidino, piperidino;
and X is chosen from the list comprising Cl, Br, I;
and R''' is NMe₂ or NEt₂ or pyrrolidyl or a combination of two of them; and substituents R'''' are independently from each other methyl, ethyl, propyl, n-alkyl, iso-alkyl, sec-alkyl, tert-alkyl, cycloalkyl, phenyl, benzyl, aryl;
index a has a value ranging from 1 through p, whereat p is a positive integer numeral;
whereat the intermediate-product of this step is obtained as a hydrohalogenide salt;
b) precipitating of the salt of the intermediate-product of step a) with a weakly coordinating anion chosen from the list comprising the weakly coordinatin anions
tetrafluoridoborate, tetraphenylborate,
hexafluorophosphate, hexafluoroantimonate, hexafluoroarsenate, triflate, bistryiflylimide by dissolving the intermediate product hydrohalogenide salt of
step a) in a minimum amount of water, thus creating a saturated or nearly saturated aqueous solution, adding a saturated or nearly saturated solution of the respective sodium salt of the weakly coordinating anion under stirring,
separating the precipitated salt of the intermediate-product of step a) with the weakly coordinating anion
being formed, rinsing it and drying it;
c) deprotonating of the salt with the weakly coordinating anion from step b) by reacting it with
a metal amide within an organic solvent to the P(III) Bronsted or Lewis superbase, obtaining a suspension containing the P(III) Bronsted or Lewis superbase;
d) separating the suspension from step c) into the organic solution of the P(III) Brønsted or Lewis superbase and the residue;
e) reacting the P(III) Brønsted or Lewis superbase solution from step d) or the suspension containing the P(III) Bronsted or Lewis superbase from step c) with a metal or semi-metal complex of formula MLₘXₙ whereat
- the metal or semi-metal M is chosen from the list comprising the metals resp. semi-metals
Fe, Co, Ni, Ru, Rh, Pd, Os, Ir, Pt, Sc, Y, La, Ti, Zr, Hf, V, Nb, Ta, Cr, Mo, W, Mn, Re, Cu, Ag, Au, Zn, Cd, Hg, Al, Ga, In, Tl, Si, Ge, Sn, Pb, As, Sb, Bi, Te, Ce, Pr, Nd, Pm, Sm, Eu, Gd, Tb, Dy, Ho, Er, Tm, Yb, Lu, whereat the oxidation number of metal or semi-metal M may be 0, +1, +2, +3, +4, +5, +6, +7 or +8 as far as the theory of oxidation number allows the oxidation number of the certain metal or semi-metal M to accept the specific value;
- the ligands L are independently from each other chosen from the list comprising NO, CO, PR''''₃, NR''''₃, R''''NH₂, NH₃, H₂O, R""OH, R''''OR'''', alkene, alkyne, arene, carbenes such as CHPh or N-heterocyclic carbenes (NHC), whereat substituents R'''' are independently chosen from the list comprising the substituents methyl, ethyl, propyl,
n-alkyl, iso-alkyl, sec-alkyl, tert-alkyl,
cycloalkyl, phenyl, benzyl, aryl;
- the ligands X are independently from each other chosen from the list of formally anionic ligands comprising H, F, Cl, Br, I, OH, OR, NR₂, CN, CH₃, C₂H₅, substituted or unsubstituted alkyl ligands, H, C₆H₅, substituted or unsubstituted aryl ligands, C₅H₅, substituted or unsubstituted cyclopentadienyl ligands, C₃H₅, substituted or unsubstituted allyl ligands, C₂H₃, substituted or unsubstituted vinyl ligands, CCMe, substituted or unsubstituted 1-alkinyl ligands, COMe, substituted or unsubstituted acyl ligands, SiR₃, substituted or unsubstituted silyl ligands, formally dianionic ligands O (oxo), NR (organoimido), CHR, CR₂ (alkylidene), O₂ (peroxo), formally trianionic: N (nitrido), CR (alkylidyne);
- index m is an integer numeral having a value of 0, 1, 2, 3, 4, 5 or 6 and index n is an integer numeral having a value of 0, 1, 2, 3, 4, 5 or 6 whereat the sum of indexes m and n is maximum 8;
whereat a product mixture is obtained;
f) processing the product mixture from step e) to obtain the final product by
- removing all volatiles, either directly or after separating the product mixture into residue and product solution,
so that a raw product is obtained,
- dissolving the raw product in a non-polar organic solvent,
- clearing the obtained solution via filtration, centrifugation or sedimentation and
- evaporating the solvent to dryness.

7. Usage of a compound according to one of claims 1 to 3 as catalyst for a chemical reaction.

8. Process for manufacturing of a compound according to formula **IIIa,** 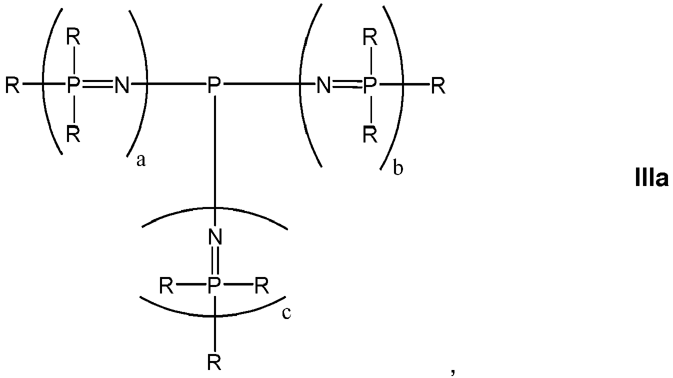 **characterized in that** the process comprises the following steps:
a) reacting an electrophile R'''₂PX with built-in auxiliary base and phosphazene according to formula **II**, 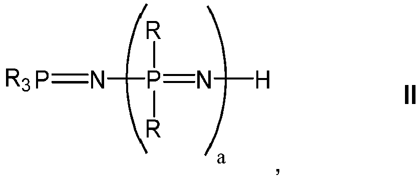 in an aprotic organic solvent,
whereat the substituents R are
i) independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, NR'₂, NHR', NR'R", N-pyrrolidino, N-piperidino, N-morpholino, N-tetraalkylguanidino (-N=C(NR₂)₂), N-phosphazenyl (-N=P(NR₂)₃),
or
ii) two substituents R chemically bound to the same P form a chelate ring with each other derived from secondary 1,2- and 1,3-diamines such as derivatives of N,N'-dialkyl-1,2-ethanediamine (-RN-CH₂CH₂-NR-), N,N'-dialkyl-1,3-propanediamine (-RN-CH₂CH₂-CH₂-NR-), or N,N'-dialkyl-1,2-cyclohexanediamine, 1,4-butandiyl, 1,5-hexandiyl,
whereat the substituents R' are independently from each other chosen from the list comprising
the substituents H, methyl, ethyl, propyl, n-alkyl, iso-alkyl, sec-alkyl, tert-alkyl, cycloalkyl, phenyl, benzyl, aryl, heteroaryl, allyl , OR, NR₂, pyrrolidino, piperidino;
and the substituents R" are independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, OR, NR₂, pyrrolidino, piperidino;
and X is chosen from the list comprising Cl, Br, I;
and R'" is NMe₂ or NEt₂ or pyrrolidyl or a combination of two of them; index a has a value ranging from 1 through p, whereat p is a positive integer numeral;
whereat the intermediate-product of this step is obtained as a hydrohalogenide salt;
b) precipitating of the salt of the intermediate-product of step a) with a weakly coordinating anion chosen from the list comprising the weakly coordinatin anions
tetrafluoridoborate, tetraphenylborate,
hexafluorophosphate, hexafluoroantimonate, hexafluoroarsenate, triflate, bistryiflylimide by dissolving the intermediate product hydrohalogenide salt of
step a) in a minimum amount of water, thus creating a saturated or nearly saturated aqueous solution, adding a saturated or nearly saturated solution of the respective sodium salt of the weakly coordinating anion under stirring,
separating the precipitated salt of the intermediate-product of step a) with the weakly coordinating anion
being formed, rinsing it and drying it;
c) deprotonating of the salt with the weakly coordinating anion from step b) by reacting it with
a metal amide within an organic solvent to the P(III) Brønsted or Lewis superbase, obtaining a suspension containing the P(III) Bronsted or Lewis superbase;
d) separating the suspension from step c) into the organic solution of the P(III) Brønsted or Lewis superbase and the residue;
e) processing the organic solution of the P(III) Brønsted or Lewis superbase from step d) to obtain the final product by
- removing all volatiles,
so that a raw product is obtained,
- dissolving the raw product in a non-polar organic solvent,
- clearing the obtained solution via filtration, centrifugation or sedimentation and
- evaporating the solvent to dryness.

9. Process for manufacturing of a compound according to formula **IIIb,** 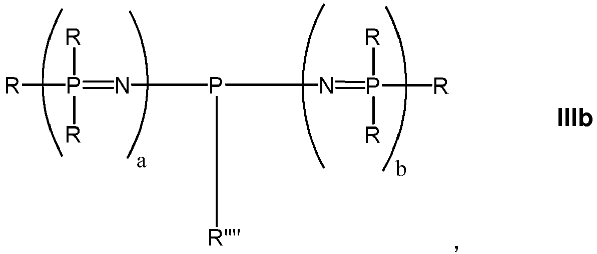 **characterized in that** the process comprises the following steps:
a) reacting an electrophile R'''R''''PX with built-in auxiliary base and phosphazene according to formula **II**, 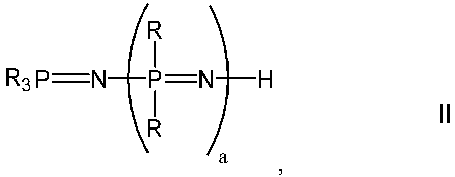 in an aprotic organic solvent,
whereat the substituents R are
i) independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, NR'₂, NHR', NR'R", N-pyrrolidino, N-piperidino, N-morpholino, N-tetraalkylguanidino (-N=C(NR₂)₂), N-phosphazenyl (-N=P(NR₂)₃),
or
ii) two substituents R chemically bound to the same P form a chelate ring with each other derived from secondary 1,2- and 1,3-diamines such as derivatives of N,N'-dialkyl-1,2-ethanediamine (-RN-CH₂CH₂-NR-), N,N'-dialkyl-1,3-propanediamine (-RN-CH₂CH₂-CH₂-NR-), or N,N'-dialkyl-1,2-cyclohexanediamine, 1,4-butandiyl, 1,5-hexandiyl,
whereat the substituents R' are independently from each other chosen from the list comprising
the substituents H, methyl, ethyl, propyl, n-alkyl, iso-alkyl, sec-alkyl, tert-alkyl, cycloalkyl, phenyl, benzyl, aryl, heteroaryl, allyl , OR, NR₂, pyrrolidino, piperidino;
and the substituents R" are independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, OR, NR₂, pyrrolidino, piperidino;
and X is chosen from the list comprising Cl, Br, I;
and R'" is NMe₂ or NEt₂ or pyrrolidyl or a combination of two of them; and R'''' is methyl, ethyl, propyl, n-alkyl, iso-alkyl, sec-alkyl, tert-alkyl, cycloalkyl, phenyl, benzyl, aryl;
index a has a value ranging from 1 through p, whereat p is a positive integer numeral;
whereat the intermediate-product of this step is obtained as a hydrohalogenide salt;
b) precipitating of the salt of the intermediate-product of step a) with a weakly coordinating anion chosen from the list comprising the weakly coordinatin anions
tetrafluoridoborate, tetraphenylborate,
hexafluorophosphate, hexafluoroantimonate, hexafluoroarsenate, triflate, bistryiflylimide by dissolving the intermediate product hydrohalogenide salt of
step a) in a minimum amount of water, thus creating a saturated or nearly saturated aqueous solution, adding a saturated or nearly saturated solution of the respective sodium salt of the weakly coordinating anion under stirring,
separating the precipitated salt of the intermediate-product of step a) with the weakly coordinating anion
being formed, rinsing it and drying it;
c) deprotonating of the salt with the weakly coordinating anion from step b) by reacting it with
a metal amide within an organic solvent to the P(III) Bronsted or Lewis superbase, obtaining a suspension containing the P(III) Bronsted or Lewis superbase;
d) separating the suspension from step c) into the organic solution of the P(III) Bronsted or Lewis superbase and the residue;
e) processing the organic solution of the P(III) Brønsted or Lewis superbase from step d) to obtain the final product by
- removing all volatiles,
so that a raw product is obtained,
- dissolving the raw product in a non-polar organic solvent,
- clearing the obtained solution via filtration, centrifugation or sedimentation and
- evaporating the solvent to dryness.

10. Process for manufacturing of a compound according to formula **IIIc,** 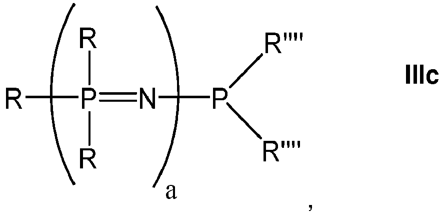 **characterized in that** the process comprises the following steps:
a) reacting an electrophile R''''₂PX or an electrophile R''''₂PR''' with built-in auxiliary base and phosphazene according to formula **II**, 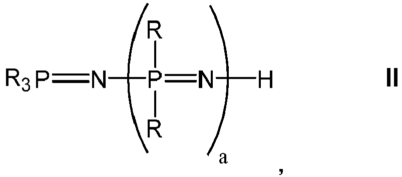 in an aprotic organic solvent,
whereat the substituents R are
i) independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, NR'₂, NHR', NR'R", N-pyrrolidino, N-piperidino, N-morpholino, N-tetraalkylguanidino (-N=C(NR₂)₂), N-phosphazenyl (-N=P(NR₂)₃),
or
ii) two substituents R chemically bound to the same P form a chelate ring with each other derived from secondary 1,2- and 1,3-diamines such as derivatives of N,N'-dialkyl-1,2-ethanediamine (-RN-CH₂CH₂-NR-), N,N'-dialkyl-1,3-propanediamine (-RN-CH₂CH₂-CH₂-NR-), or N,N'-dialkyl-1,2-cyclohexanediamine, 1,4-butandiyl, 1,5-hexandiyl,
whereat the substituents R' are independently from each other chosen from the list comprising
the substituents H, methyl, ethyl, propyl, n-alkyl, iso-alkyl, sec-alkyl, tert-alkyl, cycloalkyl, phenyl, benzyl, aryl, heteroaryl, allyl , OR, NR₂, pyrrolidino, piperidino;
and the substituents R" are independently from each other chosen from the list comprising the substituents methyl, ethyl, propyl, n-alkyl, iso-alkyl, sec-alkyl, tert-alkyl, cycloalkyl, phenyl, benzyl, aryl, heteroaryl, allyl, OR, NR₂, pyrrolidino, piperidino;
and X is chosen from the list comprising Cl, Br, I;
and R'" is NMe₂ or NEt₂ or pyrrolidyl or a combination of two of them; and substituents R'''' are independently from each other methyl, ethyl, propyl, n-alkyl, iso-alkyl, sec-alkyl, tert-alkyl, cycloalkyl, phenyl, benzyl, aryl;
index a has a value ranging from 1 through p, whereat p is a positive integer numeral;
whereat the intermediate-product of this step is obtained as a hydrohalogenide salt;
b) precipitating of the salt of the intermediate-product of step a) with a weakly coordinating anion chosen from the list comprising the weakly coordinatin anions
tetrafluoridoborate, tetraphenylborate,
hexafluorophosphate, hexafluoroantimonate, hexafluoroarsenate, triflate, bistryiflylimide by dissolving the intermediate product hydrohalogenide salt of
step a) in a minimum amount of water, thus creating a saturated or nearly saturated aqueous solution, adding a saturated or nearly saturated solution of the respective sodium salt of the weakly coordinating anion under stirring,
separating the precipitated salt of the intermediate-product of step a) with the weakly coordinating anion
being formed, rinsing it and drying it;
c) deprotonating of the salt with the weakly coordinating anion from step b) by reacting it with
a metal amide within an organic solvent to the P(III) Bronsted or
Lewis superbase, obtaining a suspension containing the P(III) Bronsted or Lewis superbase;
d) separating the suspension from step c) into the organic solution of the P(III) Bronsted or Lewis superbase and the residue;
e) processing the organic solution of the P(III) Bronsted or Lewis superbase from step d) to obtain the final product by
- removing all volatiles,
so that a raw product is obtained,
- dissolving the raw product in a non-polar organic solvent,
- clearing the obtained solution via filtration, centrifugation or sedimentation and
- evaporating the solvent to dryness.
